(19) **Europäisches Patentamt / European Patent Office / Office européen des brevets**

(11) **EP 4 552 774 B1**

(12) # EUROPEAN PATENT SPECIFICATION

(45) Date of publication and mention
of the grant of the patent:
**25.03.2026 Bulletin 2026/13**

(21) Application number: **25153178.6**

(22) Date of filing: **11.03.2020**

(51) International Patent Classification (IPC):
**B23C 5/06** *(2006.01)* **B23C 5/10** *(2006.01)*
**B23Q 17/09** *(2006.01)* **B23Q 17/10** *(2006.01)*
**G05B 19/4065** *(2006.01)*

(52) Cooperative Patent Classification (CPC):
**B23C 5/10; B23C 5/06; B23C 5/109;**
**B23Q 17/0966; B23Q 17/098; B23Q 17/0985;**
**B23Q 17/10; G05B 19/4065;** B23C 2260/76;
G05B 2219/37134; G05B 2219/37274;
G05B 2219/37337; G05B 2219/37388;
G05B 2219/37428; G05B 2219/50203

(54) **ROTATING TOOL, MODULE AND CUTTING SYSTEM**

ROTIERENDES WERKZEUG, MODUL AND SCHNEIDSYSTEM

OUTIL ROTATIF, MODULE ET SYSTÈME DE COUPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2019 JP 2019147274**

(43) Date of publication of application:
**14.05.2025 Bulletin 2025/20**

(62) Document number(s) of the earlier application(s) in
accordance with Art. 76 EPC:
**20851430.7 / 4 011 534**

(73) Proprietor: **SUMITOMO ELECTRIC INDUSTRIES,
LTD.
Osaka-shi, Osaka 541-0041 (JP)**

(72) Inventors:
- **KOIKE, Yusuke**
  **Osaka-shi, 541-0041 (JP)**
- **AOKI, Tomoya**
  **Osaka-shi, 541-0041 (JP)**

(74) Representative: **Boult Wade Tennant LLP
Salisbury Square House
8 Salisbury Square
London EC4Y 8AP (GB)**

(56) References cited:
EP-A1- 3 511 096 US-A1- 2006 085 092
US-A1- 2016 303 698

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a rotating tool, a module and a cutting system. As used throughout this description, the singular forms "a," "an," and "the" include plural reference unless the context clearly dictates otherwise. The priority based on Japanese Patent Application No. 2019-147274 filed on Aug. 9, 2019 is claimed.

### BACKGROUND ART

Conventionally, for example, rotating tools such as milling cutters and drills, and cutting tools such as turning tools including cutters have been developed.

For example, Patent Document 1 (Japanese Unexamined Patent Publication No. 2009-542446) has disclosed the following system. That is, there has been disclosed a system that has a container (1) and contains parts in a tool holder (20), wherein the tool holder (20) has a first end (21) and a second end (22), the first end (21) of the tool holder (20) is adapted to be fixed to a machine tool, the second end (22) is adapted to attach a cutting edge, and the tool holder (20) includes an internal cavity (23) surrounded by a cavity wall, the cavity (23) contains the container (1), the container has at least a central portion (2) and distal end portions (3, 4), the distal end portions (3, 4) are joined to the central portion (2), and at least any one of the distal end portions forms a lid so as to be releasably joined to the central portion, the central portion (2) includes an outer surface having at least one contact region (5) adapted to contact the cavity wall in the tool holder (20) and at least one gap region (6) adapted to contact a cooling medium, one end of the cavity (23) is adapted to be joined to a supply portion for the cooling medium, the other end of the cavity (23) is joined to an outlet for the cooling medium, the cavity (23) has an opening (25) for attaching the container (1), and at least one gap for sending the cooling medium is formed between the container (1) and the cavity wall, and the container (1) is adapted to contain the parts. EP 3 511 096 A1 concerns a cutting tool for cutting an object, or a holder for retaining the cutting tool, and is configured so that a current-carrying path for measuring a change in a member of the cutting tool or the holder is formed directly or indirectly in all or a position of the member. US 2006/085092 A1 discloses a module attachable to a shaft portion of a rotating tool, the module comprises a body, an acceleration sensor and strain gauges.

### CITATION LIST

### PATENT LITERATURES

Patent Literature 1: Japanese Unexamined Patent Publication No. 2009-542446
Patent Literature 2: Japanese Patent Application Laid-Open No. 2018-54611
Patent Literature 3: U.S. Patent No. 9864362
Patent Literature 4: Japanese Patent Application Laid-Open No. 2009-285804
Patent Literature 5: International Publication No. 2017/002762
Patent Literature 6: Japanese Patent Application Laid-Open No. 2016-221665
Patent Literature 7: Japanese Utility Model Registration No. 3170029
Patent Literature 8: Japanese Patent Application Laid-Open No. 2015-77658
Patent Literature 9: International Publication No. 2015/056495
Patent Literature 10: European Patent Application Publication No. 3292930
Patent Literature 11: International Publication No. 2018/047834
Patent Literature 12: International Publication No. 2016/202569
Patent Literature 13: Japanese Patent Application Laid-Open No. 2006-159299

### SUMMARY OF INVENTION

A rotating tool of the present invention is provided according to claim 1.
A module of the present invention is provided according to claim 10.

### BRIEF DESCRIPTION OF DRAWINGS

[FIG.1] FIG. 1 is a side view showing a configuration of a rotating tool according to a first embodiment of the present invention.

[FIG. 2] FIG. 2 is an arrow view showing the configuration of the rotating tool according to the first embodiment of the present invention.

[FIG. 3] FIG. 3 is a side view schematically showing the rotating tool, a tool holder, and a spindle of a machine tool according to the first embodiment of the present invention.

[FIG. 4] FIG. 4 is a side view schematically showing the rotating tool, the tool holder, and the spindle of the machine tool according to the first embodiment of the present invention.

[FIG. 5] FIG. 5 is side views schematically showing the rotating tool, the tool holder, and the spindle of the machine tool according to the first embodiment of the present invention.

[FIG. 6] FIG. 6 is a view showing a configuration of a cutting system according to the first embodiment of the present invention.

[FIG. 7] FIG. 7 is a diagram showing a configuration of a management apparatus in the cutting system according to the first embodiment of the present invention.

[FIG. 8] FIG. 8 is a side view showing another example of the configuration of the rotating tool according to the first embodiment of the present invention.

[FIG. 9] FIG. 9 is a side view showing another example of the configuration of the rotating tool according to the first embodiment of the present invention.

[FIG. 10] FIG. 10 is a diagram showing a first modification of the cutting system according to the first embodiment of the present invention.

[FIG. 11] FIG. 11 is a view showing a second modification of the rotating tool according to the first embodiment of the present invention.

[FIG. 12] FIG. 12 is a side view showing a configuration of a rotating tool unit according to a second embodiment of the present invention.

[FIG. 13] FIG. 13 is a diagram showing a configuration of a cutting system according to a third embodiment of the present invention.

[FIG. 14] FIG. 14 is a diagram showing a configuration of a management apparatus in the cutting system according to the third embodiment of the present invention.

[FIG. 15] FIG. 15 is a diagram showing an overview of a processing method performed by the third embodiment of the present disclosure.

[FIG. 16] FIG. 16 is a diagram showing an example of relationships between displacement caused in a rotating tool and a rotary cutting resistance applied to the rotating tool according to the third embodiment of the present invention.

[FIG. 17] FIG. 17 is a diagram showing another example of the relationships between the displacement caused in the rotating tool and the rotary cutting resistance applied to the rotating tool according to the third embodiment of the present invention.

[FIG. 18] FIG. 18 is a diagram showing another example of correspondence relationships between the rotary cutting resistance applied to the rotating tool and the displacement caused in the rotating tool according to the third embodiment of the present invention.

[FIG. 19] FIG. 19 is a flowchart that defines a processing procedure of the management apparatus in the cutting system according to the third embodiment of the present invention.

[FIG. 20] FIG. 20 is a diagram showing an example of a criterion table held by a storage unit of the management apparatus in the cutting system according to the third embodiment of the present invention.

[FIG. 21] FIG. 21 is each of graphs showing an example of measurement results of a strain sensor, and analysis results.

[FIG. 22] FIG. 22 is each of graphs showing an example of measurement results of an acceleration sensor, and an analysis result.

[FIG. 23] FIG. 23 is an explanatory diagram showing a display example of a determination result by a display unit.

## DESCRIPTION OF EMBODIMENTS

<Problem to be solved by the present invention>

By attaching a sensor to a cutting tool such as a rotating tool or a turning tool, it is possible to measure a physical quantity indicating a state of machining by the cutting tool. An excellent technique that enables such measurement is desired.

The present invention has been made in order to solve the above-described problem, and an object thereof is to provide a rotating tool, a module and a cutting system that enable a state of machining to be accurately measured by the cutting tool.

<Effects of the present invention>

According to the present invention, it is possible to accurately measure a state of machining by a cutting tool.

<Overview of embodiments of the present invention>

The invention is defined by the appended independent claims 1, 10 and preferred embodiments are defined by the corresponding appended dependent claims.

<Details of the embodiments of the present invention>

Hereinafter, the embodiments of the present invention will be described with reference to the drawings.
Note that in the drawings, the same or corresponding portions have the same reference signs allotted, and description thereof will not be repeated. Moreover, at least a part of the embodiments described below may be arbitrarily combined.

<First embodiment>

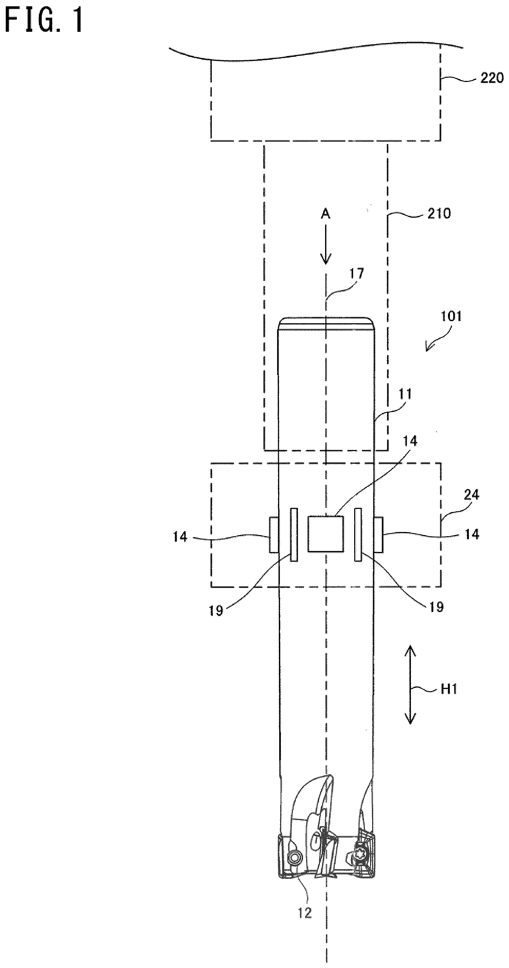

FIG. 1 is a side view showing a configuration of a rotating tool according to a first embodiment of the present invention.
A rotating tool 101 is an end mill used in a machine tool such as, for example, a milling machine, and is used for rotationally cutting a rotary cutting object made of metal or the like. The rotating tool 101 is used in a state held by a tool holder 210 such as an arbor.
The tool holder 210 is attached to a columnar spindle 220 provided in a machine tool, the spindle 220 applying a rotational force to the tool holder 210. The tool holder 210 is a columnar member disposed on an extension line of the spindle 220 of the machine tool. Specifically, an upper end of the tool holder 210 is held by the spindle 220 of the machine tool. Further, a lower end of the tool holder 210 holds the rotating tool 101.
Referring to FIG. 1, the rotating tool 101 includes a shank portion 11, which is an example of a shaft portion, a blade attaching portion 12, a blade portion not shown, acceleration sensors 14, strain sensors 19, and a housing 24. In FIG. 1, the housing 24 is indicated by a two-dot chain line, which is an imaginary line.
Note that the rotating tool 101 may have a configuration not including the blade portion. Further, the blade portion may be integrally fixed to the blade attaching portion 12, or may be detachably attached to the blade attaching portion 12.

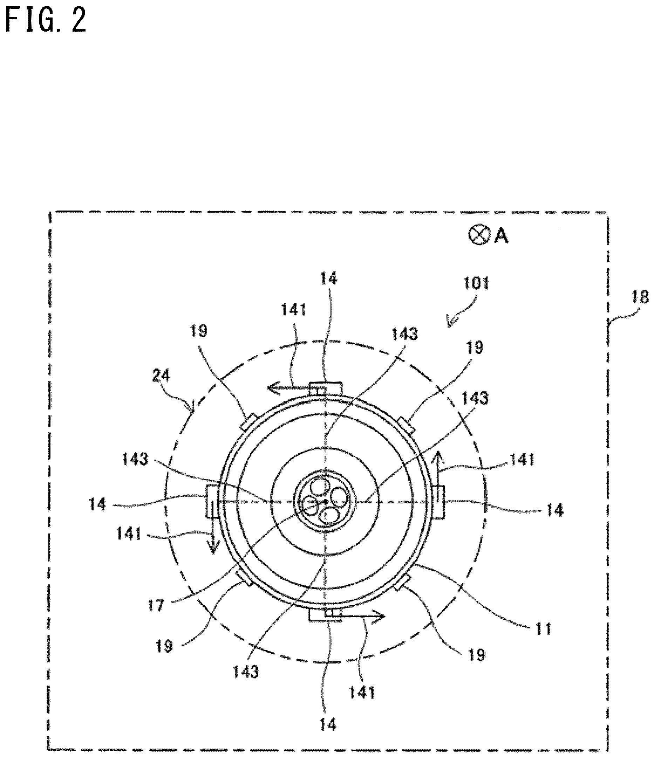

FIG. 2 is an arrow view showing the configuration of the rotating tool according to the first embodiment of the present invention. Particularly, FIG. 2 is an arrow view as seen from a direction A in FIG. 1. The direction A in FIG. 1 coincides with a direction in which a paper face on which FIG. 2 is drawn penetrates from a front side to a back side.
Referring to FIG. 2, the rotating tool 101 includes the plurality of acceleration sensors 14 and the plurality of strain sensors 19. Each of the acceleration sensors 14 and each of the strain sensors 19 are attached to a peripheral surface of the shank portion 11. Note that the number of the acceleration sensors 14 may be one. Further, the number of strain sensors 19 may be one.
In an example shown in FIG. 2, the rotating tool 101 includes the four acceleration sensors 14 and the four strain sensors 19.
Of the four acceleration sensors 14, the two acceleration sensors 14 are provided at point-symmetrical positions with respect to a rotation axis 17 of the shank portion 11. Further, the other two acceleration sensors 14 are also provided at point-symmetrical positions with respect to the rotation axis 17. The four acceleration sensors 14 are provided at positions shifted from one another by 90° in a circumferential direction of the shank portion 11.
Each of the acceleration sensors 14 may be provided at the same position, or may be provided at different positions from one another in a direction along the rotation axis 17 of the shank portion 11 (hereinafter, also referred to as a height direction H1).
Of the four strain sensors 19, the two strain sensors 19 are provided at point-symmetrical positions with respect to the rotation axis 17. Further, the other two strain sensors 19 are also provided at point-symmetrical positions with respect to the rotation axis 17. The four strain sensors 19 are provided at positions shifted from one another by 90° in the circumferential direction of the shank portion 11.
Specifically, each of the strain sensors 19 is disposed between the acceleration sensors 14 adjacent in the circumferential direction of the shank portion 11. In the example shown in FIG. 2, the strain sensor 19 is disposed at a position shifted by 45° from the acceleration sensor 14 in the circumferential direction of the shank portion 11.
Each of the acceleration sensors 14 is, for example, a so-called uniaxial acceleration sensor that measures an acceleration in one direction. A measurement direction of the acceleration sensor 14 is, for example, a direction in which vibration accompanying the rotary cutting by the rotating tool 101 is caused. That is, the acceleration sensor 14 can measure the acceleration of the vibration accompanying the rotary cutting by the rotating tool 101. Specifically, a measurement direction 141 of the acceleration sensor 14 is a direction along a plane 18 a normal line of which is the rotation axis 17 of the shank portion 11, and a direction orthogonal to a straight line 143 connecting the acceleration sensor 14 and the rotation axis 17.

Note that each of the acceleration sensors 14 may measure a centrifugal acceleration. Further, each of the acceleration sensors 14 may be, for example, a so-called three-axis acceleration sensor that measures accelerations in three directions.

Further, each of the strain sensors 19 may be provided, for example, at the same position or different positions in the direction along the rotation axis 17 of the shank portion 11.

Further, each of the acceleration sensors 14 and each of the strain sensors 19 may be provided at the same position in the height direction H1, or may be provided at positions different from one another.

When each of the acceleration sensors 14 and each of the strain sensors 19 are provided at the same position in the height direction H1, a region required for attaching each of the acceleration sensors 14 and each of the strain sensors 19 to the shank portion 11 can be reduced in the height direction H1, so that the rotating tool 101 can be downsized. In addition, since a necessity for extending a length of the shank portion 11 in order to secure the relevant region is reduced, a rigidity of the rotating tool 101 can be prevented from lowering.

A base material of the shank portion 11 is made of, for example, a cemented carbide for a rotating tool or a steel for a metal mold.

The housing 24 is attached to the shank portion 11. The housing 24 stores the acceleration sensors 14 and the strain sensors 19.

Specifically, the housing 24 includes a bottom plate portion and a side wall portion (not shown). The housing 24 covers the acceleration sensors 14 and the strain sensors 19 from below and from sides.

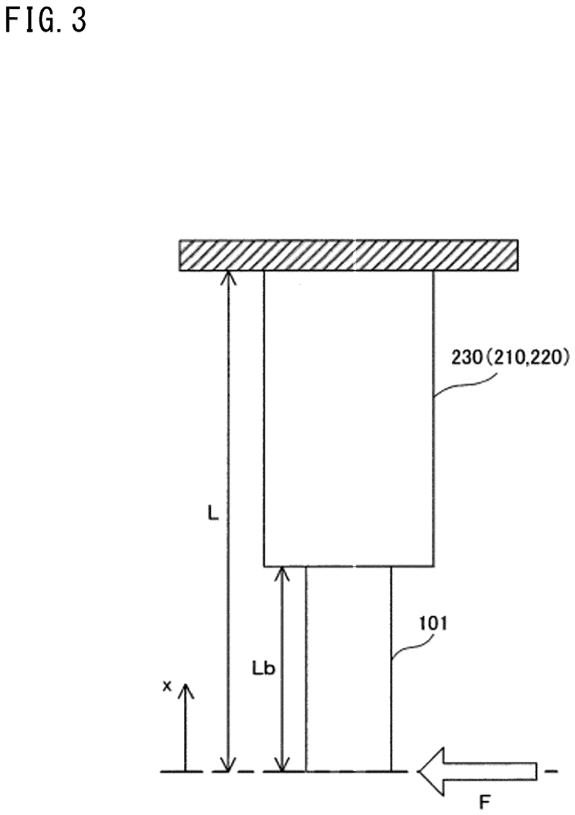

FIG. 3 is a side view schematically showing the rotating tool, the tool holder, and the spindle of the machine tool according to the first embodiment of the present invention.

Referring to FIG. 3, a description will be given of a strain caused in the rotating tool 101, the tool holder 210, and the spindle 220 of the machine tool. Note that in FIG. 3, in order to facilitate understanding, the tool holder 210 and the spindle 220 of the machine tool are integrally shown as one member. The integrated member is also referred to as a support member 230.

It is assumed that a load, that is, a rotary cutting resistance F [N] is applied from the rotary cutting object to the blade portion of the rotating tool 101 when the rotary cutting by the rotating tool 101 is performed. In this case, a strain $\varepsilon(x)$ [$\varepsilon$] caused on an outermost surface of the support member 230 is represented by the following expression (1). Note that the strain $\varepsilon(x)$ is a bare number. However, in this specification, a unit [$\varepsilon$] is described in order to clearly indicate that $\varepsilon(x)$ is a strain.

[Expression 1]

$$\varepsilon_{(x)} = \frac{Fx}{EZ_s} \quad at \quad L_b \le x \le L \quad \cdots \cdots \quad (1)$$

In expression (1), x is a distance [mm] from a tip portion of the rotating tool 101 to a measurement position of the strain, $\varepsilon(x)$ is a strain [$\varepsilon$] at the measurement position, and Lb is a length [mm] of the rotating tool 101, L is a distance [mm] from the tip portion of the rotating tool 101 to a base end of the support member 230, Zs is a section modulus [mm^3] at the measurement position of the strain on the support member 230, and E is the Young's modulus [MPa]. An operator "^" represents a power.

As can be seen from expression (1), the strain $\varepsilon(x)$ is affected by the section modulus at the measurement position of the strain, but is not affected by a change in the section modulus at a portion other than the measurement position.

By measuring the strain in the support member 230 and grasping the distance x and the section modulus Zs, a rotary cutting resistance F can be calculated back, using expression (1).

However, since the distance L depends on the length Lb, even if the strain is measured on the support member 230, when the length Lb is unknown, the rotary cutting resistance F cannot be calculated, based on a measurement result of the strain.

Further, the rotating tool 101 is replaced in accordance with a degree of deterioration due to use, a type of the rotary cutting object, and the like. If the rotating tool 101 is replaced, there is a possibility that the length Lb is not constant before and after the replacement. Accordingly, in order to calculate the rotary cutting resistance F, it is necessary to measure the length Lb every time the rotating tool 101 is replaced.

On the other hand, a strain $\varepsilon(x)$ [$\varepsilon$] caused on the outermost surface of the rotating tool 101 when the rotary cutting resistance F is applied to the blade portion of the rotating tool 101 from the rotary cutting object is represented by the following expression (2).

[Expression 2]

$$\varepsilon_{(x)} = \frac{Fx}{EZ_b} \quad at \quad 0 \le x \le L_b \quad \cdot \ \cdot \ \cdot \ \cdot \ \cdot \quad (2)$$

In expression (2), x is the distance [mm] from the tip portion of the rotating tool 101 to the measurement position of the strain, Lb is the length [mm] of the rotating tool 101, Zb is the section modulus [mm^3] at the measurement position of the strain in the rotating tool 101, and E is the Young's modulus [MPa].

As can be seen from expression (2), the strain ε(x) in the rotating tool 101 is affected by a change in the section modulus at the measurement position of the strain, but is not affected by a change in the section modulus at a portion other than the measurement position. Specifically, for example, the strain ε(x) in the rotating tool 101 is not affected even if the section modulus of the support member 230 changes.

Accordingly, even if characteristics of the spindle 220 of the machine tool and the tool holder 210 change due to replacement of the support member 230, that is, the spindle 220 of the machine tool and the tool holder 210, and the like, the strain ε(x) in the rotating tool 101 is not affected by the relevant change in the characteristics.

By measuring the strain in the rotating tool 101 and grasping the distance x and the section modulus Zb, the rotary cutting resistance F can be calculated back, using expression (2).

Further, a positional relationship between a rotary cutting position and the measurement position in the rotating tool 101, specifically, for example, a distance between the rotary cutting position and the measurement position is constant. Therefore, the length Lb need not be measured in order to calculate the rotary cutting resistance F, every time the rotating tool 101 is replaced. Accordingly, the rotary cutting resistance F can be easily calculated, based on the measurement result of the strain.

Further, by measuring the strain in the rotating tool 101, the rotary cutting resistance F can be calculated without being affected by the section modulus Zs of the support member 230.

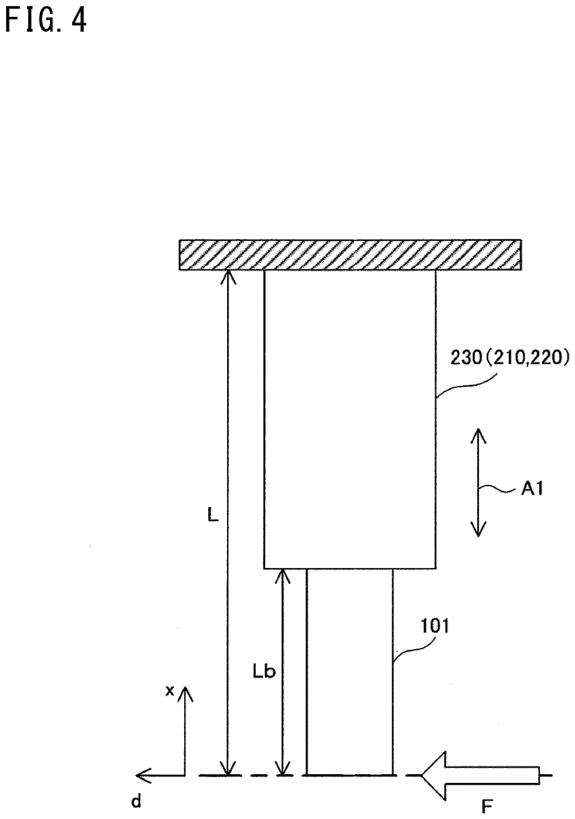

FIG. 4 is a side view schematically showing the rotating tool, the tool holder, and the spindle of the machine tool according to the first embodiment of the present invention.

Referring to FIG. 4, displacement caused in the rotating tool 101, the tool holder 210, and the spindle 220 will be described. Note that in FIG. 4, in order to facilitate understanding, the tool holder 210 and the spindle 220 of the machine tool are also integrally shown as one member. The integrated member is referred to as the support member 230.

When the rotary cutting by the rotating tool 101 is performed, when a load, that is, the rotary cutting resistance F is applied to the blade portion of the rotating tool 101 from the rotary cutting object, a displacement amount d(x) [mm] caused in the support member 230 is represented by the following expression (3).

[Expression 3]

$$d_{(x)} = \frac{F}{6EI_s}(x^3 - 3L^2x + 2L^3) \quad at \quad L_b \le x \le L \quad \cdot \ \cdot \ \cdot \ \cdot \ \cdot \quad (3)$$

In expression (3), x is the distance [mm] from the tip portion of the rotating tool 101 to the measurement position of the acceleration, Lb is the length [mm] of the rotating tool 101, and L is the distance [mm] from the tip portion of the rotating tool 101 to the base end of the support member 230, Is is a moment of inertia of area [mm^4] at the measurement position of the acceleration on the support member 230, and E is the Young's modulus [MPa].

Since the support member 230 is a combination of the tool holder 210 and the spindle 220 of the machine tool, the moment of inertia of area Is of the support member 230 is not constant in an axial direction A1 of the tool holder 210 and the spindle 220 of the machine tool. Therefore, it is considered that the moment of inertia of area Is cannot help being virtually determined by a preliminary investigation. Accordingly, it is not easy to accurately calculate the rotary cutting resistance F, using expression (3).

On the other hand, a right side of expression (3) is a term of the rotary cutting resistance F. In addition, when the displacement amount d(x) is differentiated twice with respect to time, the acceleration is obtained. Therefore, when the rotary cutting resistance F changes due to the occurrence of a loss in the blade portion or the like, a measured value of the acceleration changes. Accordingly, by observing the change in the measured value of the acceleration, it is possible to detect the occurrence of a problem such as a loss of the blade portion.

On the other hand, the displacement amount d(x) [mm] caused in the rotating tool 101 when the rotary cutting resistance F is applied from the rotary cutting object to the blade portion of the rotating tool 101 is represented by the following expressions (4) to (6).

[Expression 4]

$$d_{(x)} = \left\{ \frac{x^3}{6EI_b} + \left( \theta_p - \frac{L_b^2}{2EI_b} \right) x + d_p - L_b \theta_p + \frac{L_b^3}{6EI_b} \right\} F \quad at \quad 0 \le x \le L_b \quad \cdots \cdot (4)$$

[Expression 5]

$$d_p = \frac{1}{6EI_s} \left( L_b^3 - 3L^2 L_b + 2L_b^3 \right) \quad \cdots \cdot (5)$$

[Expression 6]

$$\theta_p = \frac{1}{2EI_s} \left( L_b^2 - L^2 \right) \quad \cdots \cdot (6)$$

In expression (4), x is the distance [mm] from the tip portion of the rotating tool 101 to the measurement position of the acceleration, d(x) is the displacement amount [mm] at the measurement position of the acceleration, Lb is the length [mm] of the rotating tool 101, Ib is a moment of inertia of area at the measurement position of the acceleration in the rotating tool 101, Is is the moment of inertia of area [mm^4] at the measurement position of the acceleration in the support member 230, and E is the Young's modulus [MPa], and in expression (6), L is a distance [mm] from the tip portion of the rotating tool 101 to a fixed end of the support member 230.

When expressions (5) and (6) are substituted into expression (4), expression (4) includes the moment of inertia of area Is and the distance L. Accordingly, it can be seen that the displacement amount d(x) in the rotating tool 101 is affected by the rigidity of the tool holder 210 and the spindle 220 of the machine tool. Namely, the measured value of the acceleration is affected by the characteristics of an entire spindle system including the spindle 220 of the machine tool, the tool holder 210, and the rotating tool 101.

By grasping the distance x, the length Lb, the distance L, the moment of inertia of area Ib, the moment of inertia of area Is, and the Young's modulus E, it is theoretically possible to calculate the rotary cutting resistance F back, using the acceleration measured at the support member 230, and expressions (4) to (6). However, actually, it is very difficult to calculate the rotary cutting resistance F back because it is necessary to identify each of the numerical values every time the spindle 220 in the machine tool or the tool holder 210 is changed.

Further, a right side of expression (4) is a term of the rotary cutting resistance F. In addition, when the displacement amount d(x) is differentiated twice with respect to time, the acceleration is obtained. Therefore, when the rotary cutting resistance F changes due to the occurrence of a loss in the blade portion or the like, a measured value of the acceleration changes. Accordingly, by observing the change in the measured value of the acceleration, it is possible to detect the occurrence of a problem such as a loss of the blade portion.

As described above, in a case where each of the strain sensors is installed in the tool holder 210 or the spindle 220 of the machine tool and the strain is measured, unless the distance between the measurement position of the strain (installation position of the strain sensor) and the rotary cutting position, and the rigidity of the rotating tool 101 are examined, it is not possible to calculate the rotary cutting resistance accompanying the rotary cutting, based on the measurement result of the strain in the strain sensor.

Further, even if the acceleration sensor is installed in the tool holder 210 or the spindle 220 of the machine tool and measures the acceleration, it is difficult to calculate an absolute value of the rotary cutting resistance accompanying the rotary cutting, and thus, while it is possible to calculate a relative amount of change in the rotary cutting resistance, it is difficult to calculate an absolute amount of change.

On the other hand, by installing the strain sensor in the rotating tool 101 and measuring the strain, it is possible to calculate the rotary cutting resistance F accompanying the rotary cutting, based on the measurement result of the strain in the strain sensor, and even if at least any one of the tool holder 210 and the spindle 220 of the machine tool changes, the calculation of the rotary cutting resistance F is not affected.

Further, by installing the acceleration sensor in the rotating tool 101 and measuring the acceleration, it is possible to calculate the displacement at the measurement position of the acceleration (installation position of the acceleration sensor) including the displacement of the spindle 220 of the machine tool and the tool holder 210. In addition, while it is possible to calculate the relative change amount of the rotary cutting resistance F, based on the measurement result of the acceleration in the rotating tool 101, the acceleration includes the influence of the spindle 220 of the machine tool and the tool holder 210, so that it is very difficult to calculate the absolute amount of change in the rotary cutting resistance F, based on the measurement result of the acceleration.

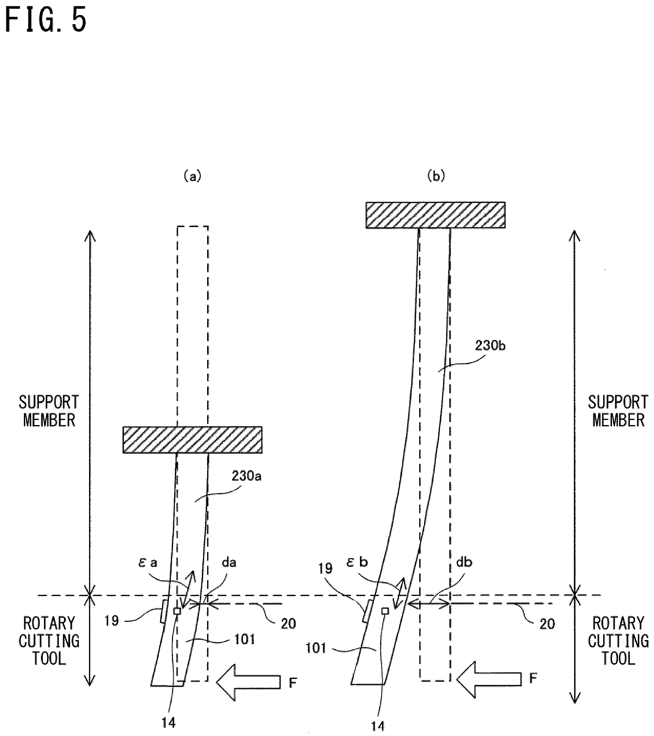

FIG. 5 is a side view schematically showing the rotating tool, the tool holder, and the spindle of the machine tool according to the first embodiment of the present invention. Particularly, a left side in FIG. 5 shows a state (a) in which the length of the spindle of the machine tool, and the tool holder is short, and a right side in FIG. 5 shows a state (b) in which the length of the spindle of the machine tool and the tool holder are long.

Referring to FIG. 5, a description will be given of the rotating tool 101 and the strain and the displacement caused in the rotating tool 101. Note that in FIG. 5, in order to facilitate understanding, the tool holder 210 and the spindle 220 of the machine tool are integrally shown as one member. The integrated member in the state (a) is referred to as a support member 230a, and the integrated member in the state (b) is referred to as a support member 230b.

In the state (a), an upper end of the support member 230a functions as a fixed end of the cantilever. An upper end of the rotating tool 101 is attached to a lower end of the support member 230a.

The acceleration sensor 14 and the strain sensor 19 are provided at a predetermined height position 20 in the support member 230a. Namely, the acceleration sensor 14 and the strain sensor 19 are provided at the same height position 20.

When the rotary cutting resistance F is applied to the blade portion located at the tip portion of the rotating tool 101, the support member 230a and the rotating tool 101 are displaced from a linear state indicated by a broken line to a curved state indicated by a solid line. Along with the displacement to the curved state, a displacement amount da is caused at the position where the acceleration sensor 14 is provided in the rotating tool 101, and a strain $\varepsilon a$ is caused at the position where the strain sensor 19 is provided in the rotating tool 101.

The acceleration sensor 14 measures the acceleration accompanying the generation of the displacement amount da. The strain sensor 19 measures the strain $\varepsilon a$.

In the state (b), an upper end of the support member 230b functions as a fixed end of a cantilever. The upper end of the rotating tool 101 is attached to a lower end of the support member 230b.

The acceleration sensor 14 and the strain sensor 19 are provided at a predetermined height position 20 in the support member 230b. Namely, the acceleration sensor 14 and the strain sensor 19 are provided at the same height position 20. The height position 20 in the state (a) and the height position 20 in the state (b) have the same height.

When the rotary cutting resistance F is applied to the blade portion located at the tip portion of the rotating tool 101, the support member 230b and the rotating tool 101 are displaced from a linear state indicated by a broken line to a curved state indicated by a solid line. The rotary cutting resistance F in the state (b) has the same direction and magnitude as the rotary cutting resistance F in the state (a).

Along with the displacement of the support member 230b and the rotating tool 101, a displacement amount db is caused at the position where the acceleration sensor 14 is provided in the rotating tool 101, and a strain $\varepsilon b$ is caused at the position where the strain sensor 19 is provided in the rotating tool 101.

Since the support member 230b is longer and has a lower rigidity than the support member 230a, the displacement amount db is larger than the displacement amount da.

Specifically, the acceleration caused in the rotating tool 101 is caused due to absolute displacement at the position where the acceleration sensor 14 is provided. The displacement is caused by accumulation of the strains in a region from the position where the acceleration sensor 14 is provided to the fixed end of the support member 230.

Therefore, the acceleration caused in the rotating tool 101 is affected by not only characteristics such as a shape of the rotating tool 101 and the position of the acceleration sensor 14, but also characteristics such as a shape of the support member 230.

On the other hand, each of the strain $\varepsilon a$ and the strain $\varepsilon b$ is decided by conditions of the rotary cutting resistance F, a distance from a position where the rotary cutting resistance F is applied to the attaching position of the strain sensor 19, and a cross-sectional shape of the rotating tool 101 at the attaching position of the strain sensor 19. Therefore, as in the state (a) and the state (b), when the conditions of the rotary cutting resistance F and the like are the same, the strain $\varepsilon a$ and the strain $\varepsilon b$ are the same.

From the foregoing, attaching both the acceleration sensor 14 and the strain sensor 19 to the rotating tool 101 can exert the following effects.

That is, even if at least any one of the spindle 220 of the machine tool and the tool holder 210 is changed due to replacement or the like, it is possible to calculate the rotary cutting resistance F, based on the measurement result of the strain in the strain sensor installed in the rotating tool **101.** In addition, by calculating the absolute displacement caused in the rotating tool **101,** based on the measurement result of the acceleration by the acceleration sensor installed in the rotating tool 101, absolute vibration caused in the rotating tool 101 including the influence by the spindle 220 of the machine tool and the tool holder 210 can be grasped.

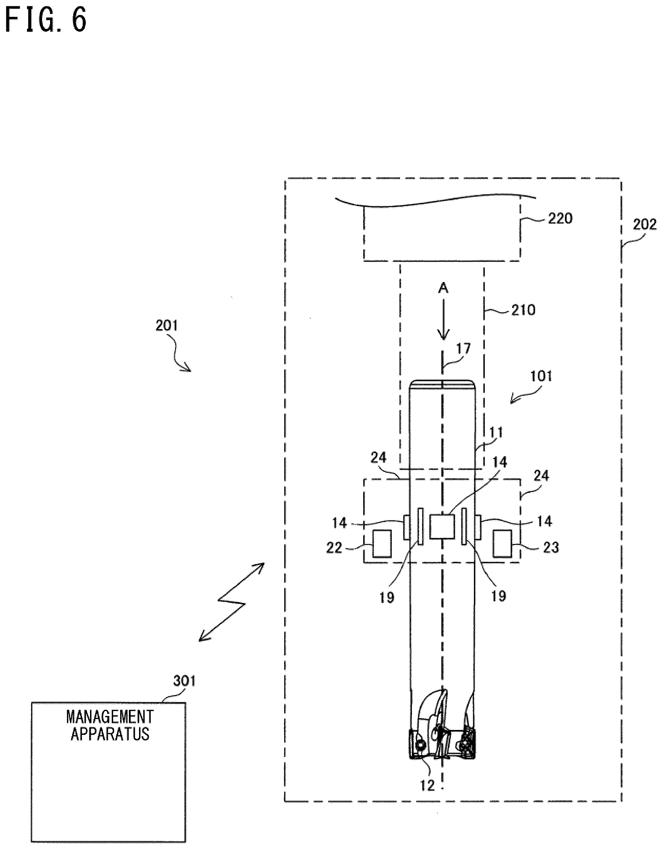

FIG. 6 is a view showing a configuration of a cutting system according to the first embodiment of the present invention. . Particularly, FIG. 6 is a view showing a state in which the rotating tool further includes a battery and a wireless communication apparatus in addition to the components shown in FIG. 1. Note that in FIG. 6, the battery and the wireless communication apparatus are indicated by solid lines.

Referring to FIG. 6, the rotating tool 101 further includes a battery 22 and a wireless communication apparatus 23 in addition to the configuration shown in FIG. 1.

The battery 22 is connected to each of the acceleration sensors 14, each of the strain sensors 19, and the wireless communication apparatus 23 via power lines not shown. The battery 22 supplies power to each of the acceleration sensors 14, each of the strain sensors 19, and the wireless communication apparatus 23 via the power lines to supply power. The power lines are each provided with a switch for switching the power supply on and off.

The wireless communication apparatus 23 is connected to each of the acceleration sensors 14 and each of the strain sensors 19 via a signal line not shown. Each of the acceleration sensors 14 outputs a measurement signal indicating the acceleration caused in the shank portion 11 to the wireless communication apparatus 23 via the signal line. Each of the strain sensors 19 outputs the measurement signal indicating the strain caused in the shank portion 11 to the wireless communication apparatus 23 via the signal line.

Upon receiving the measurement signal from the acceleration sensor 14, the wireless communication apparatus 23 causes the measurement result indicated by the received measurement signal to be included in a wireless signal, and transmits the wireless signal to a management apparatus 301 such as a personal computer outside. The management apparatus 301, for example, accumulates the received measurement results and analyzes the accumulated measurement results.

Further, upon receiving the measurement signal from the strain sensor 19, the wireless communication apparatus 23 causes the measurement result indicated by the received measurement signal to be included in a wireless signal, and transmits the wireless signal to the management apparatus 301. The management apparatus 301, for example, accumulates the received measurement results and analyzes the accumulated measurement results.

Further, the wireless communication apparatus 23 acquires positional information from a storage unit not shown and transmits, to the management apparatus 301, the positional information indicating the positional relationship between each of the acceleration sensors 14 and each of the strain sensors 19, and the blade attaching portion 12 or the blade portion, that is, the positional relationship between the measurement position and the rotary cutting position in the rotating tool 101. The management apparatus 301, for example, accumulates the received positional information, and analyzes the accumulated positional information.

The positional relationship indicated by the positional information is, for example, the distance between the measurement position and the rotary cutting position. Note that the positional information is not limited to this, and indicates the distance between the measurement position and the rotary cutting position, and a direction of the relevant rotary cutting position with respect to the measurement position or a direction of the measurement position with respect to the rotary cutting position.

The housing 24 holds the battery 22 and the wireless communication apparatus 23 in a state where the respective acceleration sensors 14, the respective strain sensors 19, the battery 22, the wireless communication apparatus 23, the power lines and the signal lines are contained therein, specifically, in a state where the respective acceleration sensors 14, the respective strain sensors 19 and the like are covered from below and from the sides.

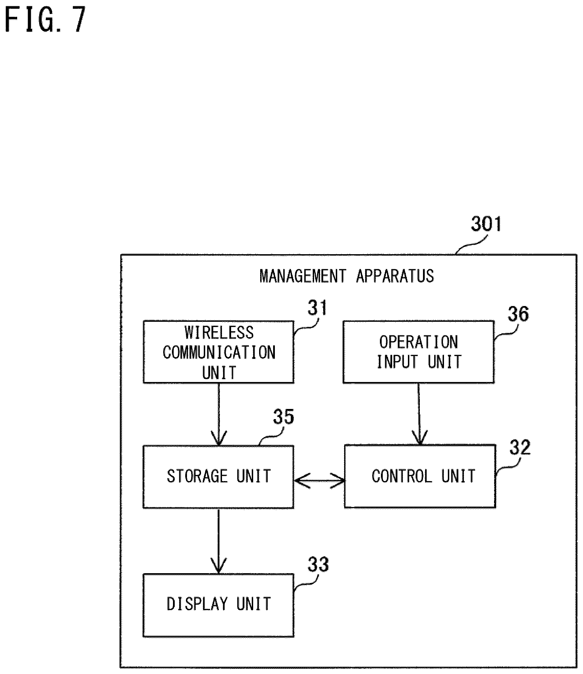

FIG. 7 is a diagram showing a configuration of the management apparatus in the cutting system according to the first embodiment of the present invention.

Referring to FIG. 6 and 7, a cutting system 201 includes a machine tool 202 for rotary cutting such as a milling machine, and the management apparatus 301.

The machine tool 202 includes the rotating tool 101, a drive unit not shown, and a control unit not shown that controls the drive unit. The drive unit is a motor or the like that drives the rotating tool 101. The control unit controls the number of rotations and the like of the drive unit.

The rotating tool 101 transmits the wireless signals including the sensor information indicating the measurement result of the acceleration sensor 14 and the measurement result of the strain sensor 19.

The management apparatus 301 receives each of the wireless signals including the sensor information from the rotating tool 101, and processes the measurement result indicated by the received sensor information. Specifically, for example, the management apparatus 301 analyzes the measurement result indicated by the received sensor information.

Specifically, the management apparatus 301 includes a wireless communication unit 31, a control unit 32, a display unit 33, a storage unit 35, and an operation input unit 36.

The wireless communication unit 31 performs wireless communication with the wireless communication apparatus 23 of the rotating tool 101. Specifically, the wireless communication unit 31 receives the relevant wireless signal including sensor information from the wireless communication apparatus 23 of the rotating tool 101, and stores, in the storage unit 35, the measurement result indicated by the sensor information included in the wireless signal.

The operation input unit 36 includes a user interface such as a keyboard and a mouse. The operation input unit 36 receives an instruction and data input from a user.

The storage unit 35 includes, for example, a storage apparatus such as an HDD (Hard Disk Drive). Further, for example, the storage unit 35 includes an auxiliary storage apparatus such as a CD-ROM (Compact Disc Read Only Memory), a DVD-ROM (Digital Versatile Disk Read Only Memory) or a BD-ROM (Blu-ray (registered trademark) Disc Read Only Memory). Further, for example, the storage unit 35 includes a semiconductor memory such as a RAM (Random Access Memory) and a ROM (Read Only Memory).

The storage unit 35 stores a program and data for operating the control unit 32, the measurement results received by the wireless communication unit 31 from the rotating tool 101, analysis results of the control unit 32, and the like.

The control unit 32 includes, for example, a CPU (Central Processing Unit). The control unit 32 analyzes the measurement results of the acceleration sensor 14 accumulated in the storage unit 35, and stores the analysis results in the storage unit 35. Further, the control unit 32 controls the respective units such as the wireless communication unit 31 and the display unit 33 in the management apparatus 301.

The display unit 33 is, for example, a display. The display unit 33 displays the analysis results of the control unit 32 accumulated in the storage unit 35. The display unit 33 may be provided outside the management apparatus 301.

Further, when it is difficult to directly transmit and receive the wireless signals between the machine tool 202 and the management apparatus 301 in the cutting system 201, for example, because a distance between the two is long or the like, a relay apparatus is provided between the two. In this case, the machine tool 202 transmits the wireless signals to the management apparatus 301 via the relay apparatus.

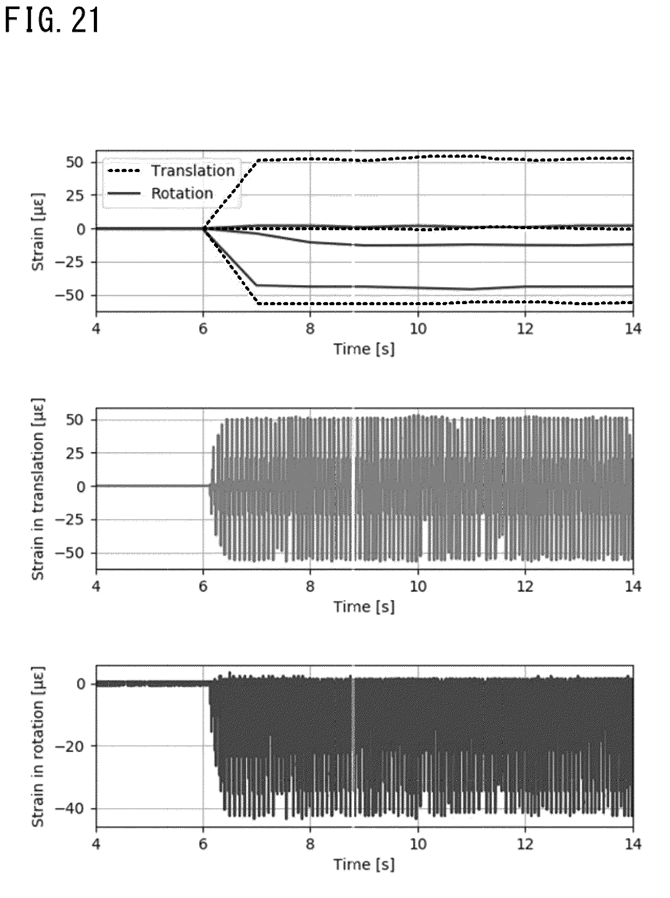

FIG. 21 is each of graphs showing an example of the measurement results and the analysis results of the strain.

Specifically, the lower graph in FIG. 21 shows temporal change of the strain in a rotation direction measured by the strain sensor 19, and the middle graph in FIG. 21 shows temporal change of the strain in a translation direction measured by the strain sensor 19.

The upper graph in FIG. 21 is an example of the analysis results of the strain by the control unit 32. Here, a moving maximum value, a moving minimum value, and an moving average value with a window width of one second are illustrated.

That is, in the upper graph of FIG. 21, three solid-line graphs are the analysis results calculated by the control unit 32 from the measurement results of the strain in the rotation direction (lower graph). The three solid-line graphs represent, in order from the top, a moving maximum value, a moving average value, and a moving minimum value of the strain in the rotational direction. Further, three broken-line graphs are analysis results calculated by the control unit 32 from the measurement results of the strain in the translation direction (middle graph). The three broken-line graphs indicate, in order from the top, a moving maximum value, a moving average value, and a moving minimum value of the strain in the translation direction.

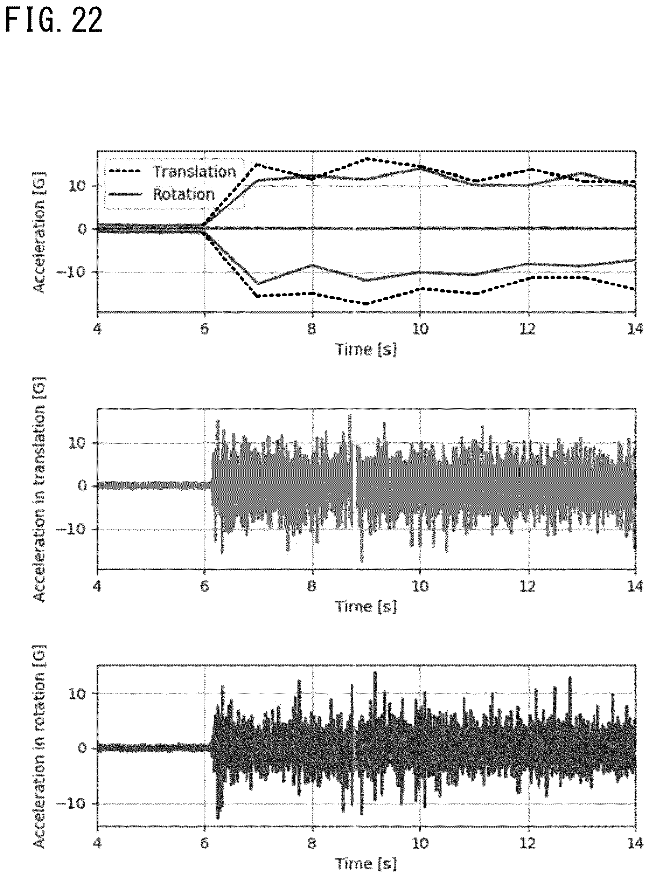

FIG. 22 is graphs showing an example of the measurement results and the analysis results of the acceleration.

Specifically, the lower graph of FIG. 22 shows temporal change of the acceleration in the rotation direction measured by the acceleration sensor 14, and the middle graph of FIG. 22 shows temporal change of the acceleration in the translation direction measured by the acceleration sensor 14.

The upper graph in FIG. 22 is an example of the analysis results of the acceleration by the control unit 32. Here, a moving maximum value, a moving minimum value, and a moving average value with a window width of one second are also illustrated.

That is, in the upper graph of FIG. 22, three solid-line graphs are the analysis results calculated by the control unit 32 from the measurement results of the acceleration in the rotation direction (lower graph). The three solid-line graphs represent, in order from the top, a moving maximum value, a moving average value, and a moving minimum value of the acceleration in the rotation direction. The three broken-line graphs are the analysis results calculated by the control unit 32 from the measurement results of the acceleration in the translation direction (middle graph). The three broken-line graphs represent, in order from the top, a moving maximum value, a moving average value, and a moving minimum value of the acceleration in the translation direction.

The analysis results (upper graphs) in FIGS. 21 and 22 are accumulated in the storage unit 35 and displayed in the display unit 33. The analysis results (upper graphs) in FIGS. 21 and 22 can also be transmitted from the wireless communication unit 31 to an external device (another management apparatus, a portable terminal, or the like). In this case, the analysis results can be displayed on a display included in the external device.

The measurement results of FIGS. 21 and 22 (middle graphs and lower graphs) can also be displayed on the display unit 33 or transmitted to an external device.

[Using method]

Referring to FIG. 7, a using method of the rotating tool 101 will be described.

First, the shank portion 11 of the rotating tool 101 is fixed to, for example, the tool holder 210 in the machine tool 202.

Next, the power is supplied from the battery 22 to each of the acceleration sensors 14, each of the strain sensors 19, and the wireless communication apparatus 23 by switching the switch provided on each of the power lines from off to on.

Next, the rotating tool 101 is rotationally driven to rotationally cut the rotary cutting object, which causes the acceleration and the strain accompanying the rotary cutting in the shank portion 11.

Each of the acceleration sensors 14 outputs the measurement signal indicating the acceleration caused in the shank portion 11 to the wireless communication apparatus 23. Further, each of the strain sensors 19 outputs the measurement signal indicating the strain caused in the shank portion 11 to the wireless communication apparatus 23.

Next, the wireless communication apparatus 23 causes the measurement result indicated by the measurement signal received from the acceleration sensor 14, and the identification information of the acceleration sensor 14 to be included in the wireless signal, and transmits the wireless signal to the management apparatus 301 outside. In addition, the wireless communication apparatus 23 causes the measurement result indicated by the measurement signal received from the strain sensor 19 and the identification information of the strain sensor 19 to be included in the wireless signal, and transmits the wireless signal to the management apparatus 301 outside.

For example, the rotating tool 101 stores the identification information in a storage unit not shown. The wireless communication apparatus 23 transmits the identification information stored in the relevant storage unit.

In the management apparatus 301, the wireless communication unit 31 receives the wireless signal including the sensor information indicating the measurement result of the acceleration sensor 14 from the wireless communication apparatus 23, and stores the received sensor information in the storage unit 35. Further, the wireless communication unit 31 receives the wireless signal including the sensor information indicating the measurement result of the strain sensor 19 from the wireless communication apparatus 23, and stores the received sensor information in the storage unit 35.

The control unit 32 analyzes the measurement results accumulated in the storage unit 35 in accordance with an instruction input from the user via the operation input unit 36.

The rotating tool 101 may have a configuration that includes neither a temperature sensor 26 nor a sound sensor 27.

Further, the rotating tool 101 may have a configuration without the housing 24.

Further, the rotating tool 101 may have a configuration without the wireless communication apparatus 23. In this case, for example, the rotating tool 101 stores the sensor information and the like in a storage unit not shown. For example, the user performs an operation for storing, in the storage unit 35 of the management apparatus 301, the sensor information and the like stored in the foregoing storage unit.

Further, the wireless communication apparatus 23 may be configured not to transmit the positional information indicating the positional relationship between each of the acceleration sensors 14 and each of the strain sensors 19, and the blade attaching portion 12 or the blade portion. In this case, for example, the management apparatus 301 beforehand stores the relevant positional relationship in the storage unit 35.

Further, instead of transmitting the positional information, the wireless communication apparatus 23 in the rotating tool 101 may be configured to transmit the wireless signal including the identification information that enables each of the acceleration sensors 14 and each of the strain sensors 19 to be identified.

The management apparatus 301 stores the identification information of each of the acceleration sensors 14 and each of the strain sensors 19, and the positional information indicating the positional relationship between the corresponding acceleration sensor 14 and each of the strain sensors 19, and the blade attaching portion 12, or the positional relationship between the corresponding acceleration sensor 14 and each of the strain sensors 19, and the blade portion.

The wireless communication unit 31 of the management apparatus 301 receives the identification information from the wireless communication apparatus 23 of the rotating tool 101. The control unit 32 identifies each of the acceleration sensors 14 and each of the strain sensors 19, based on the identification information stored in the storage unit 35.

The control unit 32 acquires the positional information and the sensor information corresponding to the identification information received by the wireless communication unit 31 from the positional information stored in the storage unit 35. Then, the control unit 32 calculates the rotary cutting resistance F, the displacement amount d, and the like, based on the acquired positional information and corresponding sensor information.

Further, the wireless communication apparatus 23 may be configured not to transmit the identification information. For example, if the shank portion 11 is provided with one acceleration sensor 14 and one strain sensor 19, and frequencies of the wireless signals are different between the acceleration sensor 14 and the strain sensor 19, it is possible for the management apparatus 301 to discriminate between the sensor information from the acceleration sensor 14 and the sensor information from the strain sensor 19.

Further, the management apparatus 301 may be configured not to receive the sensor information from the rotating tool 101. In this case, for example, the rotating tool 101 stores the sensor information and the like in a storage unit not shown. For example, the user performs an operation for storing, in the storage unit 35 of the management apparatus 301, the sensor information and the like stored in the foregoing storage unit.

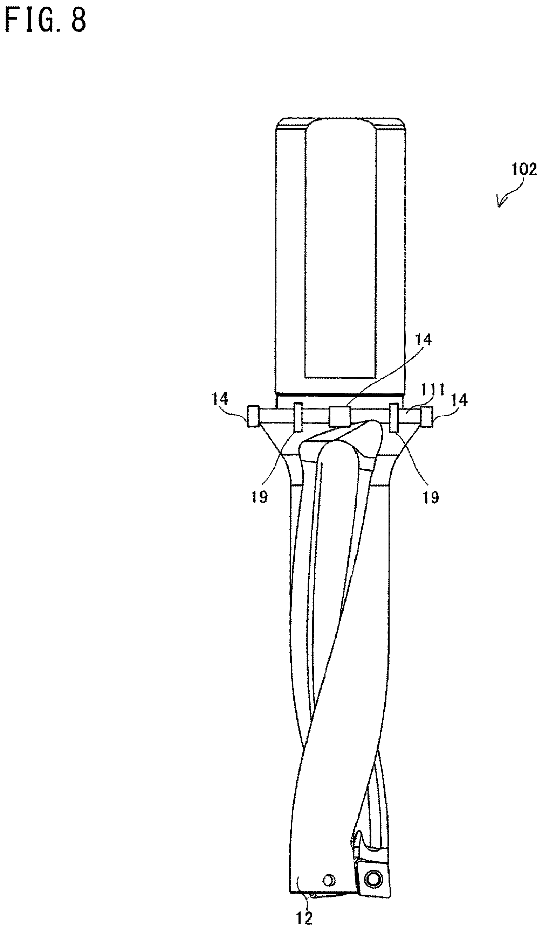

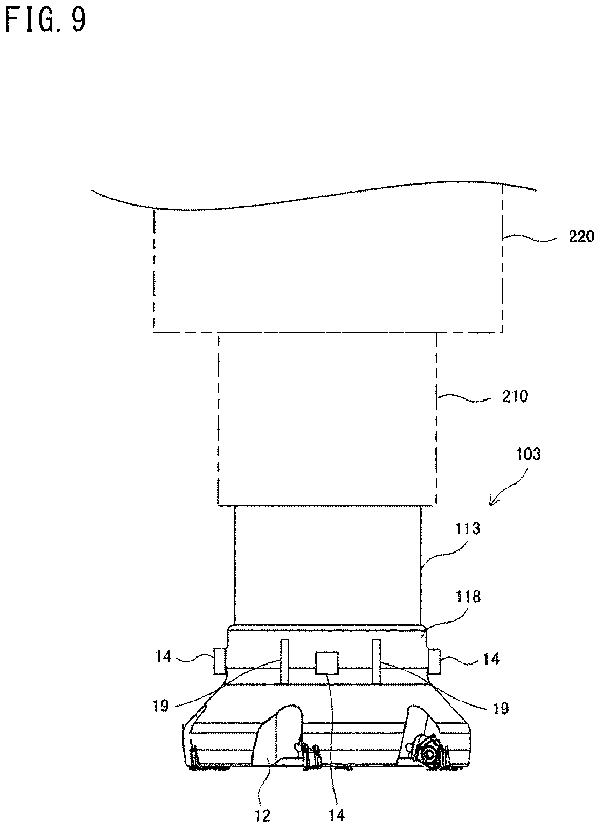

FIG. 8 and FIG. 9 are side views each showing another example of the configuration of the rotating tool according to the first embodiment of the present invention.

The example shown in FIG. 1 has the configuration in which the acceleration sensor 14 and the strain sensor 19 are attached to an end mill, which is a kind of rotating tool, but the present embodiment is not limited to this. For example, referring to FIG. 8, the acceleration sensor 14 and the strain sensor 19 may be attached to a body portion 111, which is an example of a shaft portion in a drill 102, which is a kind of rotating tool.

Further, referring to FIG. 9, the acceleration sensor 14 and the strain sensor 19 may be configured to be attached to a boss portion 118, which is an example of a shaft portion in a milling cutter 103, which is a kind of rotating tool.

In the example shown in FIG. 9, a shank portion 113 is joined to an end of the boss portion 118 opposite to the blade attaching portion 12. The milling cutter 103 may have a configuration in which the shank portion 113 is not provided. In this case, the boss portion 118 is attached to the tool holder 210.

[First modification]

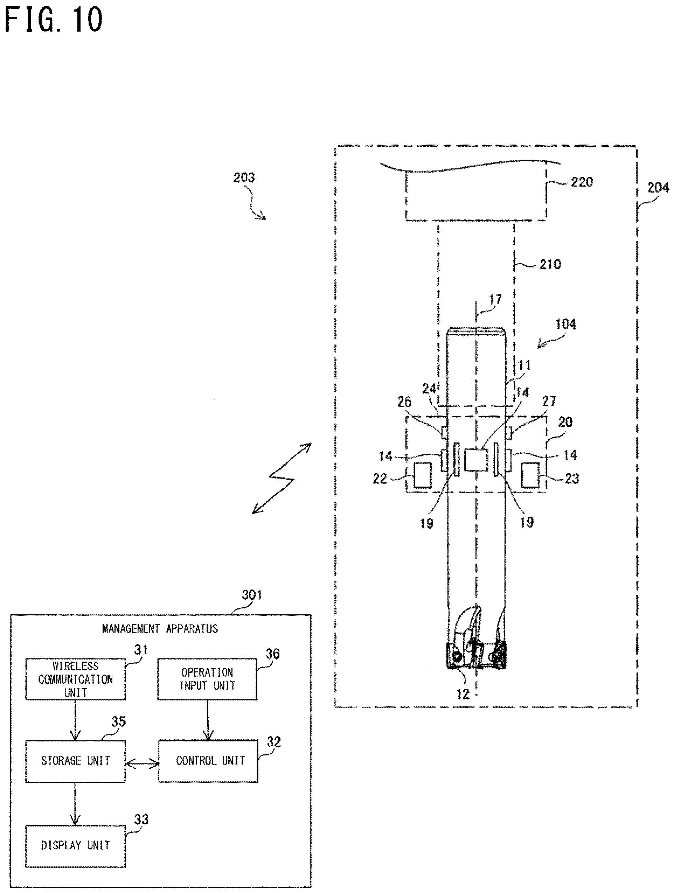

FIG. 10 is a view showing a first modification of the cutting system according to the first embodiment of the present invention.

Referring to FIG. 10, a cutting system 203 according to the first modification includes a machine tool 204 instead of the machine tool 202 shown in FIG. 6. In the machine tool 204 according to the first modification, the rotating tool 104 further includes the temperature sensor 26 and the sound sensor 27, as compared with the rotating tool 101 shown in FIG. 6.

The temperature sensor 26 is attached to the shank portion 11. The temperature sensor 26 measures a temperature of the shank portion 11.

The sound sensor 27 is attached to the shank portion 11. The sound sensor 27 measures sound caused around the shank portion 11.

The battery 22 is connected to the temperature sensor 26 and the sound sensor 27 via power lines not shown. The battery 22 supplies power to the temperature sensor 26 and the sound sensor 27 via the power lines.

The wireless communication apparatus 23 is connected to the temperature sensor 26 and the sound sensor 27 via signal lines not shown. The temperature sensor 26 outputs a measurement signal indicating the temperature of the shank portion 11 to the wireless communication apparatus 23 via the signal line. The sound sensor 27 outputs a measurement signal indicating the sound caused in the shank portion 11 to the wireless communication apparatus 23 via the signal line.

Upon receiving the measurement signal from the temperature sensor 26, the wireless communication apparatus 23 causes the measurement result indicated by the received measurement signal to be included in the wireless signal, and transmits the wireless signal to the management apparatus 301. The management apparatus 301, for example, accumulates the received measurement results and analyzes the accumulated measurement results.

Further, upon receiving the measurement signal from the sound sensor 27, the wireless communication apparatus 23 causes the measurement result indicated by the received measurement signal to be included in the wireless signal, and transmits the wireless signal to the management apparatus 301. The management apparatus 301, for example, accumulates the received measurement results and analyzes the accumulated measurement results.

The housing 24 holds the temperature sensor 26 and the sound sensor 27 in a state where the temperature sensor 26 and the sound sensor 27 are contained therein, specifically, in a state where the temperature sensor 26 and the sound sensor 27 are covered from below and from the side.

The rotating tool 104 transmits the wireless signals including sensor information indicating the measurement result of the temperature sensor 26 and the measurement result of the sound sensor 27.

The management apparatus 301 receives each of the wireless signals including the sensor information from the rotating tool 101, and analyzes the measurement results indicated by the received sensor information.

The wireless communication unit 31 receives each of the wireless signals including the sensor information from the wireless communication apparatus 23 of the rotating tool 101, and stores, in the storage unit 35, the measurement result indicated by the sensor information included in the wireless signal.

The control unit 32 analyzes the measurement results of the temperature sensor 26 and the measurement results of the sound sensor 27 accumulated in the storage unit 35, respectively, and stores the analysis results in the storage unit 35.

The display unit 33 displays the analysis results of the control unit 32 accumulated in the storage unit 35.

The other configurations are similar to those of the above-described rotating tool 101, and thus, detailed description will not be repeated here.

[Second modification]

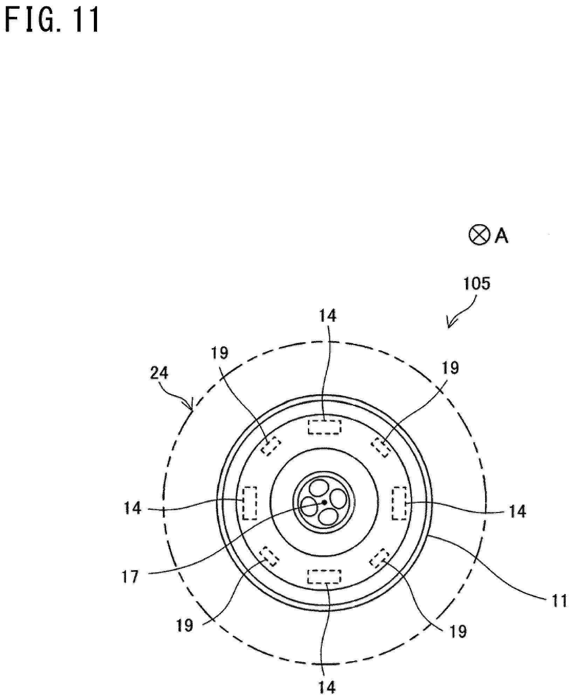

FIG. 11 is a view showing a second modification of the rotating tool according to the first embodiment of the present invention.

Referring to FIG. 11, a rotating tool 105 according to the second modification has the acceleration sensors 14 and the strain sensors 19 embedded inside the shank portion 11, as compared with the rotating tool 101 shown in FIG. 2.

Note that a battery not shown that supplies power to each of the acceleration sensors 14 and each of the strain sensors 19 may be embedded inside the shank portion 11. In addition, a wireless communication apparatus not shown may be embedded inside the shank portion 11, the wireless communication apparatus causing the measurement result of each of the acceleration sensors 14 and the measurement result of each of the strain sensors 19 to be included in wireless signals, and transmitting the wireless signals.

Further, the shank portion 11 of the rotating tool 105 may have a configuration including an enlarged diameter portion not shown, which results from enlarging a diameter of a part of the shank portion 11.

The acceleration sensors 14 and the strain sensors 19 may be embedded inside the enlarged diameter portion. Further, the above-described wireless communication apparatus may be embedded inside the enlarged diameter portion.

The other configurations are similar to those of the above-described rotating tool 101, and thus, detailed description will not be repeated here.

By attaching a sensor to the cutting tool, it is possible to measure a physical quantity indicating a state of machining by the cutting tool. An excellent technique that enables such measurement is desired.

In contrast, the rotating tool according to the first embodiment of the present invention is a rotating tool used in the state held by the tool holder 210. The relevant rotating tool has the shank portion 11 having the end attached to the tool holder 210, the blade attaching portion 12 or the blade portion provided at the end of the shank portion 11 opposite to the foregoing end, and the plurality of sensors attached to the shank portion 11. The plurality of sensors include the acceleration sensors 14 and the strain sensors 19.

Further, the cutting system according to the first embodiment of the present invention includes the rotating tool 101 and the management apparatus 301. The management apparatus 301 receives the sensor information from the rotating tool 101.

As described above, with the configuration in which the acceleration sensor 14 is attached to the shank portion 11, it is possible to acquire, based on the measurement results of the acceleration sensor 14, the physical quantities such as the displacement amount at the attaching position of the acceleration sensor 14 including the displacement amounts of the tool holder 210, and the spindle 220 that applies a rotational force to the tool holder 210 in the machine tool 202, and the rotary cutting resistance that the shank portion 11 receives from the rotary cutting object. In addition, with the configuration in which the strain sensor 19 is attached to the shank portion 11, it is possible to acquire the physical quantities such as the rotary cutting resistance and the deformation amount of the shank portion 11, based on the measurement results of the strain sensor 19, even if the tool holder 210 and the spindle 220 of the machine tool are changed due to replacement or the like. In addition, with the configuration in which the acceleration sensor 14 and the strain sensor 19 are attached to the shank portion 11, it is possible to acquire, for example, the physical quantity based on the measurement result of the acceleration sensor 14, the physical quantity based on the measurement result of the strain sensor 19, and the physical quantities based on the measurement result of the acceleration sensor 14 and the measurement result of the strain sensor 19, and to perform various verifications, using the respective physical quantities. Specifically, for example, it becomes possible to determine whether the phenomena such as vibration that occurs in the shank portion 11 or reduction in accuracy of the rotary cutting largely depend on the rotating tool, or the tool holder and the spindle of the machine tool. Further, with the configuration in which the acceleration sensor 14 and the strain sensor 19 are attached to the shank portion 11, it is possible to shorten the distance from the attaching position of the acceleration sensor 14 to the blade attaching portion 12 or the blade portion, and the distance from the attaching position of the strain sensor 19 to the blade attaching portion 12 or the blade portion as compared with the case where the sensors are provided in the tool holder 210, so that the acceleration and the stress between the blade attaching portion 12 or the blade portion and the sensor attaching position are less attenuated, and sensitivity of the acceleration sensor 14 and the strain sensor 19 can be increased.

Accordingly, in the rotating tool and the cutting system according to the first embodiment of the present invention, the state of machining by the cutting tool can be accurately measured.

Further, in the rotating tool according to the first embodiment of the present invention, the plurality of sensors further include at least any one of the temperature sensor 26 and the sound sensor 27.

With the above-described configuration, for example, when abnormal vibration is caused in the shank portion 11, it is possible to detect at least any one of frictional heat and abnormal noise accompanying the vibration.

In the rotating tool according to the first embodiment of the present invention, the rotating tool 101 further includes the housing 24 attached to the shank portion 11. The housing 24 stores the sensors.

With the above-described configuration, the sensors can be protected from cutting chips, obstacles around the sensors, and the like.

Further, in the rotating tool according to the first embodiment of the present invention, the rotating tool 101 further includes the wireless communication apparatus 23 attached to the shank portion 11. The wireless communication apparatus 23 transmits the sensor information indicating the measurement result of each of the sensors.

With the above-described configuration, for example, the management apparatus 301 can perform processing such as abnormality sensing using the measurement result of each of the sensors.

Further, in the rotating tool according to the first embodiment of the present invention, the wireless communication apparatus 23 further transmits the identification information that enables each of the plurality of sensors to be identified.

With the above-described configuration, for example, the management apparatus 301 can perform predetermined processing after precisely identifying the plurality of sensors.

Further, in the rotating tool according to the first embodiment of the present invention, the wireless communication apparatus 23 further transmits the positional information indicating the positional relationship between each of the sensors and the blade attaching portion 12 or the blade portion.

With the above-described configuration, for example, it is not necessary to beforehand store the positional information of each of the sensors in the management apparatus 301, so that the cutting system 201 can be easily constructed.

Further, in the cutting system according to the first embodiment of the present invention, the management apparatus 301 stores the identification information of each of the sensors and the positional information indicating the positional relationship between the corresponding sensor and the blade attaching portion 12 or the blade portion. The wireless communication apparatus 23 further transmits the identification information that enables each of the plurality of sensors to be identified. The management apparatus 301 further receives the identification information from the rotating tool 101, and acquires the positional information corresponding to the received identification information from the stored positional information.

With the above-described configuration, the management apparatus 301 can calculate, for example, the rotary cutting resistance applied to the rotating tool 101 and the displacement amount of the rotating tool 101, using the received information and the stored information. In addition, for example, it is not necessary to beforehand store the positional information of each of the sensors in the management apparatus 301, so that the cutting system 201 can be easily constructed.

Next, another embodiment of the present invention will be described with reference to the drawings. In the drawings, the same or corresponding portions have the same reference signs allotted, and description thereof will not be repeated.

\<Second embodiment\>

A second embodiment of the present invention relates to a rotating tool unit in which acceleration sensors 14 and strain sensors 19 are not attached to a milling cutter, and that further includes an attaching module, as compared with the milling cutter 103, which is the rotating tool according to the other example of the first embodiment. Contents other than those described below are similar to those of the milling cutter 103 according to the other example of the first embodiment.

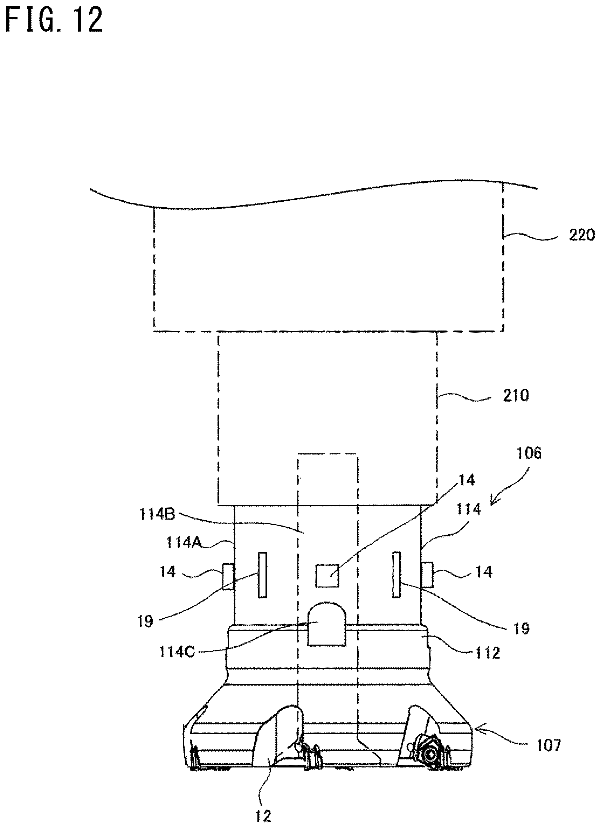

FIG. 12 is a side view illustrating a configuration of the rotating tool unit according to the second embodiment of the present invention.

Referring to FIG. 12, a rotating tool unit 106 includes a rotating tool 107 and an attaching module 114.

The rotating tool 107 is a milling cutter in an example shown in FIG. 12. The rotating tool 107 includes a boss portion 112, which is an example of a shaft portion, and a blade attaching portion 12 provided at an end of the boss portion 112 or a blade portion not shown.

The attaching module 114 is a member attachable to an end of the boss portion 112 opposite to the blade attaching portion 12 or the blade portion. Specifically, the attaching module 114 includes a body 114A, a screw portion 114B, which is an attaching portion for attaching the body 114A to the boss portion 112, a detent portion 114C functioning as a detent with respect to the boss portion 112, and the acceleration sensors 14 and the strain sensors 19 attached to the body 114A.

The body 114A is a columnar member. The acceleration sensors 14 and the strain sensors 19 are attached to a peripheral surface of the body 114A.

The rotating tool 107, the body 114A, and a tool holder 210 can be joined by the screw portion 114B.

Other configurations are similar to those of the above-described milling cutter 103, and thus, detailed description will not be repeated here.

The attaching module according to the second embodiment of the present invention is a module attachable to the boss portion 112 of the rotating tool 107 including the boss portion 112, and the blade attaching portion 12 or the blade portion provided at the end of the boss portion 112. The attaching module 114 includes a columnar body 114A attachable to the boss portion 112 along an axial direction of the boss portion 112, and the plurality of sensors attached to the body 114A. The plurality of sensors include the acceleration sensors 14 and the strain sensors 19.

As described above, with the configuration in which the acceleration sensors 14 are attached to the attaching module 114, based on the measurement results of the acceleration sensors 14, there can be acquired physical quantities such as displacement amounts at attaching positions of the acceleration sensors 14 including displacement amounts of the tool holder 210 and a spindle 220 that applies a rotational force to the tool holder 210 in the machine tool 202, and a rotary cutting resistance received by the boss portion 112 from a rotary cutting object. Further, with the configuration in which the strain sensors 19 are attached to the attaching module 114, even if the tool holder 210 and the spindle 220 of the machine tool are changed due to replacement or the like, the physical quantities such as the rotary cutting resistance and a deformation amount of the boss portion 112 can be acquired, based on measurement results of the strain sensors 19. In addition, with the configuration in which the acceleration sensors 14 and the strain sensors 19 are attached to the attaching module 114, for example, it is possible to acquire the physical quantities based on the measurement results of the acceleration sensors 14, the physical quantities based on the measurement results of the strain sensors 19, and the physical amounts based on the measurement results of the acceleration sensors 14 and the measurement results of the strain sensors 19, and to perform various verifications, using the respective physical quantities. Further, with the configuration in which the acceleration sensors 14 and the strain sensors 19 are attached to the attaching module 114, it is possible to shorten a distance from the attaching position of each of the acceleration sensors 14 to the blade attaching portion 12 or the blade portion, and a distance from the attaching position of each of the strain sensor 19 to the blade attaching portion 12 or the blade portion, as compared with the case where the sensors are attached to the tool holder 210, so that an acceleration and a stress between the blade attaching portion 12 or the blade portion and the sensor attaching position are less attenuated, and the sensitivity of the acceleration sensor 14 and the strain sensor 19 can be increased.

Accordingly, the attaching module according to the second embodiment of the present invention can accurately measure a state of machining by the cutting tool.

Next, another embodiment of the present invention will be described with reference to the drawings. In the drawings, the same or corresponding portions have the same reference signs allotted, and description thereof will not be repeated.

<Third embodiment>

A third embodiment of the present invention relates to a cutting system that performs a processing method using the rotating tool 101 and the like according to the first embodiment. Contents other than those described below are similar to those of the cutting system 201 according to the first embodiment.

Note that in the processing method and the cutting system according to the third embodiment of the present invention, the cutting tool is not limited to the rotating tool 101, but another cutting tool may be used, as long as the relevant cutting tool comprises the features set forth in claim 1. For example, in the processing method and the cutting system, the drill 102 shown in FIG. 8, the milling cutter 103 shown in FIG. 9, the rotating tool 104 shown in FIG. 10, the rotating tool 105 shown in FIG. 11, or the rotating tool unit 106 shown in FIG. 12 may be used. Further, in the processing method and the cutting system, for example, a turning tool may be used as a cutting tool other than the rotating tool.

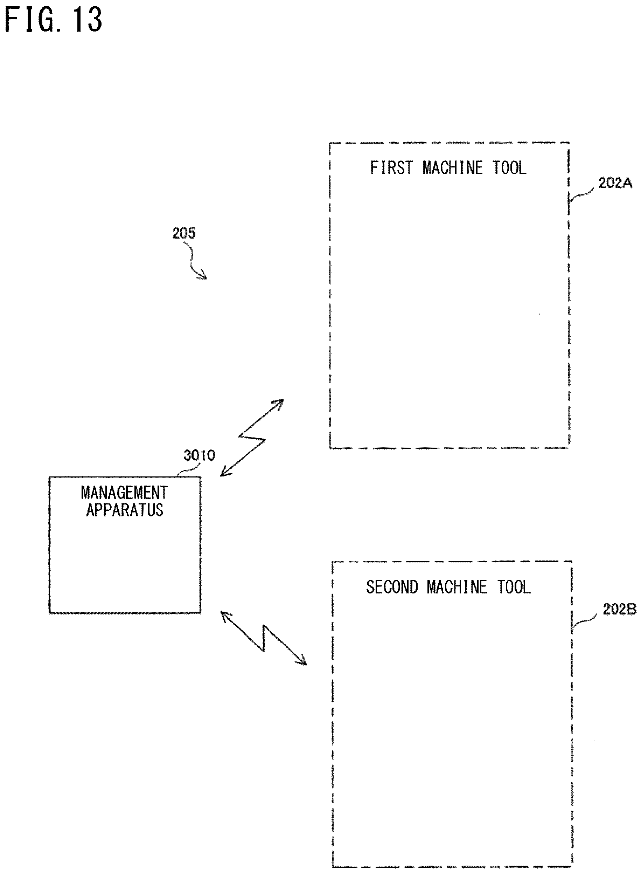

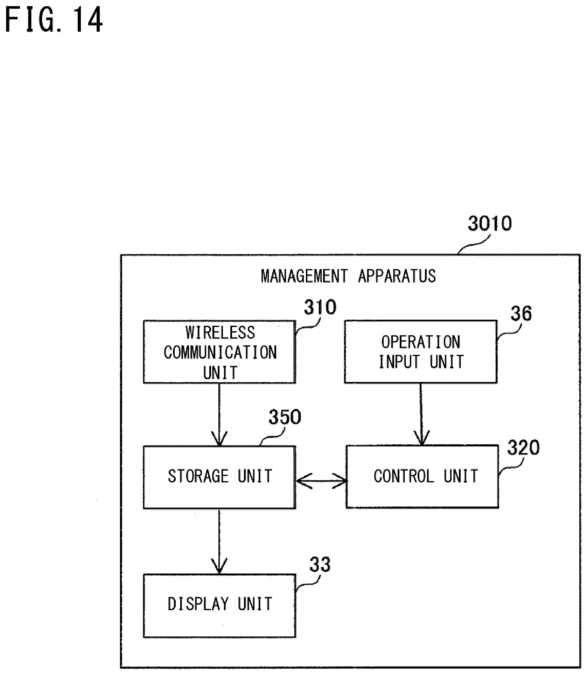

FIG. 13 is a diagram showing a configuration of the cutting system according to the third embodiment of the present invention. FIG. 14 is a diagram showing a configuration of a management apparatus in the cutting system according to the third embodiment of the present invention.

Referring to FIGS. 13 and 14, a cutting system 205 includes a machine tool 202A and a machine tool 202B, which are the machine tools 202 shown in FIG. 6. That is, each of the machine tool 202A and the machine tool 202B includes the rotating tool 101. Note that each of the machine tool 202A and the machine tool 202B may be, for example, the machine tool 204 shown in FIG. 10.

The rotating tool 101 has a shank portion 11 having an end attached to the machine tool, specifically, the first machine tool 202A or the second machine tool 202B, and a blade attaching portion 12 or a blade portion provided at an end of the shank portion 11 opposite to the above-described end, and sensors attached to the shank portion 11, specifically, acceleration sensors 14 and strain sensors 19.

Further, the cutting system 205 includes a management apparatus 3010 instead of the management apparatus 301 shown in FIG. 6.

The management apparatus 3010 includes a wireless communication unit 310, a storage unit 350, and a control unit 320 instead of the wireless communication unit 31, the storage unit 35, and the control unit 32 shown in FIG. 7.

The wireless communication unit 310 can function as a storage processing unit that accumulates measurement results of the acceleration sensors 14 and the strain sensors 19 in the storage unit 350.

Particularly, the wireless communication unit 310 receives wireless signals including sensor information indicating the measurement results of the acceleration sensors 14 and positional information indicating positions of the acceleration sensors 14 from the wireless communication apparatus 23 of the rotating tool 101, and stores the received sensor information and positional information in the storage unit 350. The positional information indicating the position of each of the acceleration sensors 14 is information indicating a positional relationship between the acceleration sensor 14 and the blade attaching portion 12 or the blade portion.

Further, the wireless communication unit 310 receives, from the wireless communication apparatus 23, wireless signals including sensor information indicating the measurement results of the strain sensors 19 and positional information indicating positions of the strain sensors 19, and stores the received sensor information and positional information in the storage unit 350. The positional information indicating the position of each of the strain sensors 19 is information indicating a positional relationship between the strain sensor 19 and the blade attaching portion 12 or the blade portion.

Specifically, the wireless communication unit 310 accumulates, in the storage unit 350, the measurement results of the acceleration sensors 14 and the strain sensors 19 when rotary cutting of a rotary cutting object is performed by the rotating tool 101 attached to the first machine tool 202A.

Further, the wireless communication unit 310 accumulates, in the storage unit 350, the measurement results of the acceleration sensors 14 and the strain sensors 19 when rotary cutting of a rotary cutting object is performed by the rotating tool 101 attached to the second machine tool 202B.

The control unit 320 processes each of the measurement results accumulated by the wireless communication unit 310. For example, the control unit 320 analyzes each of the measurement results accumulated in the storage unit 350 by the wireless communication unit 310 in accordance with an instruction input from a user via an operation input unit 36.

Particularly, for example, the control unit 320 calculates a rotary cutting resistance F, a displacement amount d, and the like, based on the sensor information and the positional information accumulated in the storage unit 350.

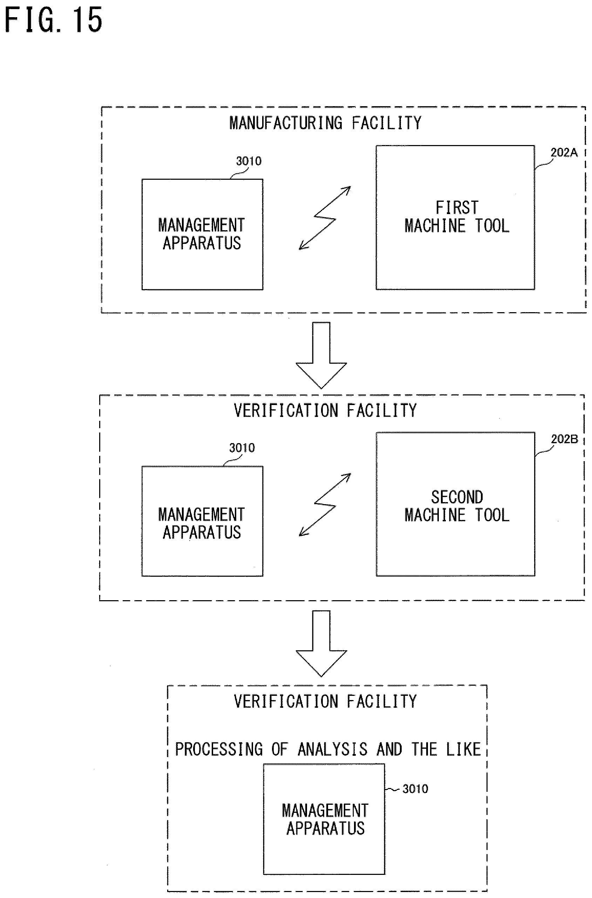

FIG. 15 is a diagram showing an overview of the processing method performed by the third embodiment of the present invention.

Referring to FIG. 15, in a processing method M performed by the third embodiment of the present invention, the user first attaches the rotating tool 101 to the first machine tool 202A. Next, the first machine tool 202A performs the rotary cutting of the rotary cutting object by the rotating tool 101. Next, the management apparatus 3010 accumulates the measurement results of the sensors. Next, the user attaches the rotating tool 101 to the second machine tool 202B. Next, the second machine tool 202B performs the rotary cutting of the rotary cutting object by the rotating tool 101. Next, the management apparatus 3010 accumulates the measurement results of the sensors. Next, the management apparatus 3010 processes each of the accumulated measurement results.

Note that in the processing method M, a plurality of sensors may be used, or one sensor may be used, and, for example, one acceleration sensor 14 or one strain sensor 19 may be used. Further, in the processing method M, one sensor of a different type from the acceleration sensor 14 and the strain sensor 19 may be used.

More specifically, the processing method M is used in a case where a cause is verified by the second machine tool and the management apparatus disposed in a verification facility in a manufacturer or the like of the rotating tool, for example, if there is a problem in the rotary cutting of the first machine tool in a manufacturing facility such as a factory.

That is, the processing method M is, for example, a method of determining in what state a system of the first machine tool 202A is, as compared with a system of the second machine tool 202B.

The system of the first machine tool 202A includes the first machine tool 202A and the rotary cutting object. The system of the second machine tool 202B includes the second machine tool 202B and the rotary cutting object.

In the processing method M, for example, it is premised that the system of the second machine tool 202B is in an appropriate state. By determining the state of the first machine tool 202A with the state of the second machine tool 202B used as a reference, it is possible to determine in what state the state of the system of the first machine tool 202A is, as compared with the system of the second machine tool 202B, that is, whether the state is appropriate, or the like.

As shown in FIG. 15, first, in a manufacturing facility, the user attaches the rotating tool 101 to the tool holder of the first machine tool 202A to perform the rotary cutting of the rotary cutting object with the rotating tool 101, and to accumulate the measurement results of the strain sensor 19 and the measurement results of the acceleration sensor 14 in the management apparatus 301.

Next, in the verification facility, the user attaches the rotating tool 101 to the tool holder of the second machine tool 202B to perform the rotary cutting of the rotary cutting object by the rotating tool 101, and to accumulate the measurement results of the strain sensor 19 and the measurement results of the acceleration sensor 14 in the management apparatus 301.

Note that the rotating tool 101 attached to the tool holder of the second machine tool 202B is the same rotating tool 101 as the rotating tool 101 attached to the tool holder of the first machine tool 202A, or another rotating tool 101 having the same performance as the rotating tool 101 attached to the tool holder of the first machine tool 202A.

Next, the user analyzes the accumulated measurement results of the strain sensor 19 and the measurement results of the acceleration sensor 14, using the management apparatus 3010 in the verification facility. Note that the management apparatus 3010 is not limited to the analysis of the measurement results, and may be configured to perform other types of processing.

In the processing method M, the measurement result of the acceleration sensor 14 and the measurement result of the strain sensor 19 can be used more significantly than in the first embodiment. Details will be described below.

By providing the strain sensor 19 in the shank portion 11, the rotary cutting resistance F of the rotating tool 101 can be calculated, based on the measurement result of the strain sensor 19, as described above.

By providing the acceleration sensor 14 in the shank portion 11, the displacement amount d of the rotating tool 101 can be calculated, based on the measurement result of the acceleration sensor 14, as described above.

Further, by providing the strain sensor 19 and the acceleration sensor 14 in the shank portion 11, a displacement/strain can be calculated. The displacement amount/the strain, that is, $d(x)/\varepsilon(x)$ [mm] is represented by the following expressions (7) to (9).

[Expression 7]

$$\frac{d_{(x)}}{\varepsilon_{(x)}} = \left\{ \frac{x^3}{6EI_b} + \left(\theta_p - \frac{L_b^2}{2EI_b}\right)x + d_p - L_b\theta_p + \frac{L_b^3}{6EI_b} \right\} \frac{EZ_b}{x} \quad \cdots \cdots \quad (7)$$

[Expression 8]

$$d_p = \frac{1}{6EI_s}\left(L_b^3 - 3L^2L_b + 2L_b^3\right) \quad \cdots \cdots \quad (8)$$

[Expression 9]

$$\theta_p = \frac{1}{2EI_s}\left(L_b^2 - L^2\right) \quad \cdots \cdots \quad (9)$$

d(x)/ε(x) (hereinafter, also referred to as d/ε) is used when the state of the relevant machine tool is determined, for example, if a problem is caused in the rotary cutting when the rotary cutting is performed by a certain machine tool.

Specifically, if the rotating tool 101 is common in the manufacturing facility and the verification facility, since a latter half ($EZ_b/x$) of a term on a right side of expression (7) is constant, only a first half of the term of the right side of expression (7) can be changed under influence of the tool holder 210 and a spindle 220 of the machine tool.

Further, the first half of the term on the right side of expression (7) is common to a first half of a term of the right side of expression (4), that is, a portion to which the rotary cutting resistance F is applied. Therefore, change in a value of d/ε in expression (7) indicates that a relationship between the displacement amount d(x) and the rotary cutting resistance F in expression (4) changes. Further, the fact that the value of d/ε in expression (7) is constant indicates that the relationship between the displacement amount d(x) and the rotary cutting resistance F in expression (4) is constant.

Accordingly, by comparing d/ε in the manufacturing facility and d/ε in the verification facility, when a value of the displacement amount d(x) in expression (4) changes, it can be determined whether a cause of the change is due to the rotary cutting resistance F or the influence of the tool holder 210 and the spindle 220 of the machine tool.

A purpose of using expression (7) is, for example, to make it easier, by erasing the rotary cutting resistance F from expression (4), to grasp whether or not a value of the portion where the rotary cutting resistance F is applied in the right side of expression (4), that is, the portion affected by structures of the tool holder 210 and the spindle 220 of the machine tool (hereinafter, also referred to as an affected portion) is constant. A simplest way to achieve the purpose is to divide the left side of expression (4) by a left side ε(x) of expression (2), and to divide the right side of expression (4) by a right side of expression (2), as in expression (7).

Note that in order to make it easier to grasp whether or not the value of the affected portion is constant, instead of expression (7), the following expression (10) obtained by dividing both sides of expression (4) by the rotary cutting resistance F may be used. The rotary cutting resistance F is, for example, a value calculated, based on the measurement result of a strain ε(x).

[Expression 10]

$$\frac{d_{(x)}}{F} = \frac{x^3}{6EI_b} + \left(\theta_p - \frac{L_b^2}{2EI_b}\right)x + d_p - L_b\theta_p + \frac{L_b^3}{6EI_b} \quad \cdots \cdots \quad (10)$$

Here, the determination of the state of the machine tool will be described.

The rotary cutting resistance F indicates a magnitude of a resistance that the blade portion of the rotating tool 101 receives from the rotary cutting object when the rotary cutting of the rotary cutting object is performed. Accordingly, the magnitude of the rotary cutting resistance F is proportional to an area of contact between the blade portion and the rotary cutting object at the moment when the blade portion is rotationally cutting the rotary cutting object. From this, the rotary cutting resistance F is represented by the following expression (11).

[Expression 11]

$$F \cong K_c\left(f_z - d\right)a_p \quad \cdots \cdots \quad (11)$$

In expression (11), Kc is a specific rotary cutting resistance [N/mm^2], fz is a feed amount per blade of the rotating tool 101 [mm/t], and ap is a depth of cut in an axial direction of the rotating tool 101 [mm], and d is a displacement of the rotating tool 101 [mm].

The specific rotary cutting resistance Kc is mainly determined by a shape of a cutting edge of the rotating tool 101 and a material of the rotary cutting object.

The displacement amount d calculated, based on the acceleration sensor 14 is related to an amount of the rotating tool 101 escaping from the rotary cutting object, so that increase in the displacement indicates that the rotary cutting of the rotary cutting object is not appropriately performed.

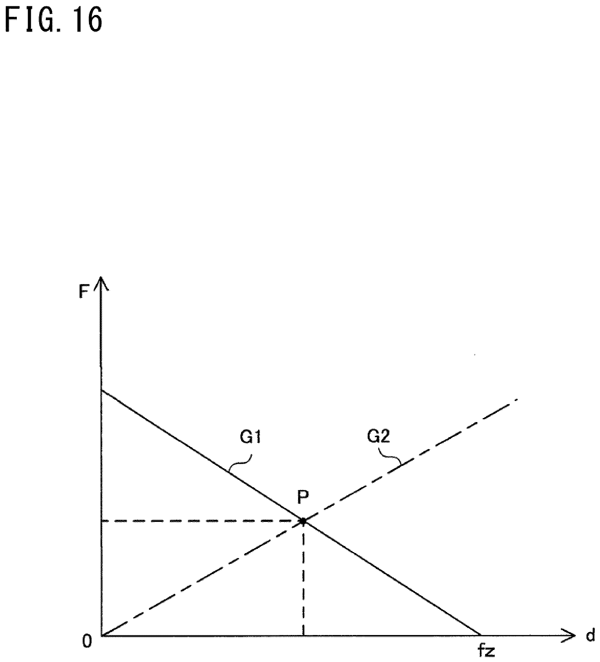

FIG. 16 is a diagram showing an example of relationships between the displacement caused in the rotating tool and the rotary cutting resistance applied to the rotating tool according to the third embodiment of the present invention.

In FIG. 16, a horizontal axis indicates the displacement caused in the shank portion 11, and a vertical axis indicates the rotary cutting resistance applied to the shank portion 11. Further, graphs G1 and G2 show a relationship between the rotary cutting resistance F and the displacement amount d represented by expression (11), and a relationship between the rotary cutting resistance F and the displacement amount d represented by expression (4), respectively.

A gradient of the graph G1 changes, depending on the specific rotary cutting resistance Kc if machining conditions, that is, the feed amount fz and the depth of cut ap are constant. In addition, if the feed amount fz and the depth of cut ap are constant, and the rotating tool 101 is the same, the specific rotary cutting resistance Kc is determined by the rotary cutting object.

Referring to FIG. 16, coordinates of an intersection P of the graphs G1 and G2 indicating the relationship between displacement amount d and rotary cutting resistance F satisfy expressions (4) and (11).

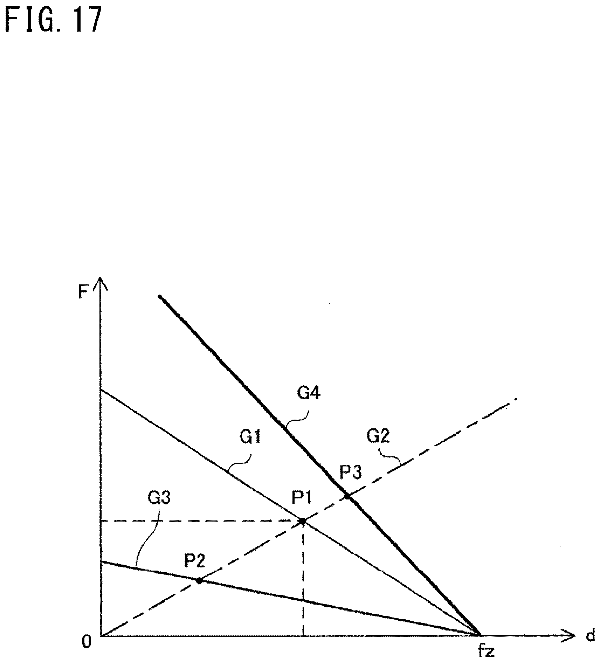

FIG. 17 is a diagram showing another example of the relationship between the displacement caused in the rotating tool and the rotary cutting resistance applied to the rotating tool according to the third embodiment of the present invention.

FIG. 17 further shows graphs G3 and G4 in which the specific rotary cutting resistance Kc is changed due to change of the rotary cutting object, by which a gradient is changed from the graph G1. That is, FIG. 17 further shows the graph G3 whose gradient is smaller than that of the graph G1 and the graph G4 whose gradient is larger than that of the graph G1, as compared with FIG. 16.

Referring to FIG. 17, while by changing the specific rotary cutting resistance Kc, the gradient of the graph G1 changes according to expression (11), the gradient of the graph G2 does not change according to expression (4) and thus, at an intersection P1 between the graph G1 and the graph G2, an intersection P2 between the graph G3 and the graph G2, and an intersection P3 between the graph G4 and the graph G2, the relationship between the displacement amount d and the rotary cutting resistance F is the same, that is, the value of $d/\varepsilon$ is the same as one another.

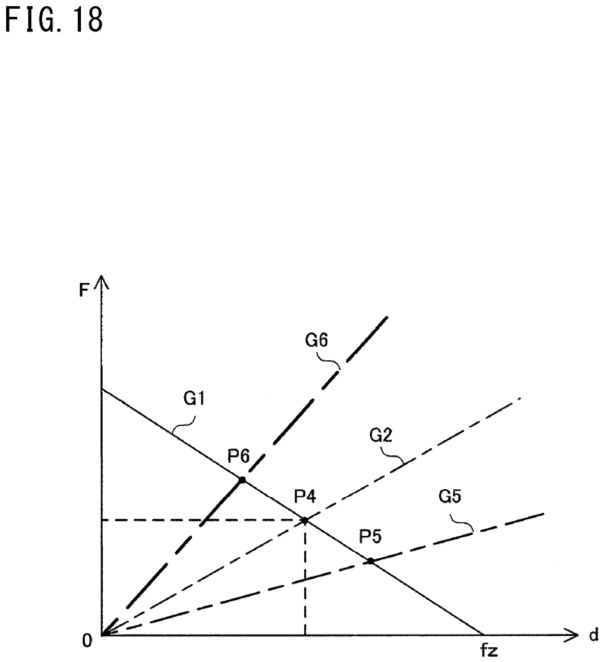

FIG. 18 is a diagram showing another example of a correspondence relationship between the rotary cutting resistance applied to the rotating tool and the displacement caused in the rotating tool according to the third embodiment of the present invention.

FIG. 18 further shows graphs G5 and G6 in which at least any one of the spindle 220 of the machine tool and the tool holder 210 is changed due to replacement or the like, by which the gradient is changed from the graph G2. That is, FIG. 18 further shows the graph G5 whose gradient is smaller than that of the graph G2 and the graph G6 whose gradient is larger than that of the graph G2, as compared with FIG. 16.

Referring to FIG. 18, by changing at least any one of the spindle 220 and the tool holder 210 of the machine tool, the gradient of the graph G1 does not change according to expression (11), while the gradient of the graph G2 according to expression (4) changes, and thus, at intersections between the graphs G2, G5, G6 and the graph G1, the relationships between the displacement amount d and the rotary cutting resistance F are different, that is, the values of $d/\varepsilon$ are different from one another.

An intersection P4 between the graph G1 and the graph G2, an intersection P5 between the graph G1 and the graph G5, and an intersection P6 between the graph G1 and the graph G6 are located on the graphs G2, G5, and G6 having different gradients, respectively. Accordingly, the values of $d/\varepsilon$ corresponding to the intersection P4, the intersection P5, and the intersection P6 are different from one another.

Next, an example of processing of the management apparatus 3010 according to the third embodiment of the present invention will be described.

[Operation flow]

Each apparatus in the management apparatus 3010 includes a computer including a part or all of the control unit 320, and an arithmetic operation processing unit such as a CPU in the computer reads and executes programs including a part or all of steps of the following sequence diagram or flowchart from a memory such as the storage unit 350. Each of these programs of the plurality of apparatuses can be externally installed. These programs of the plurality of apparatuses are each distributed in a state stored in a recording medium.

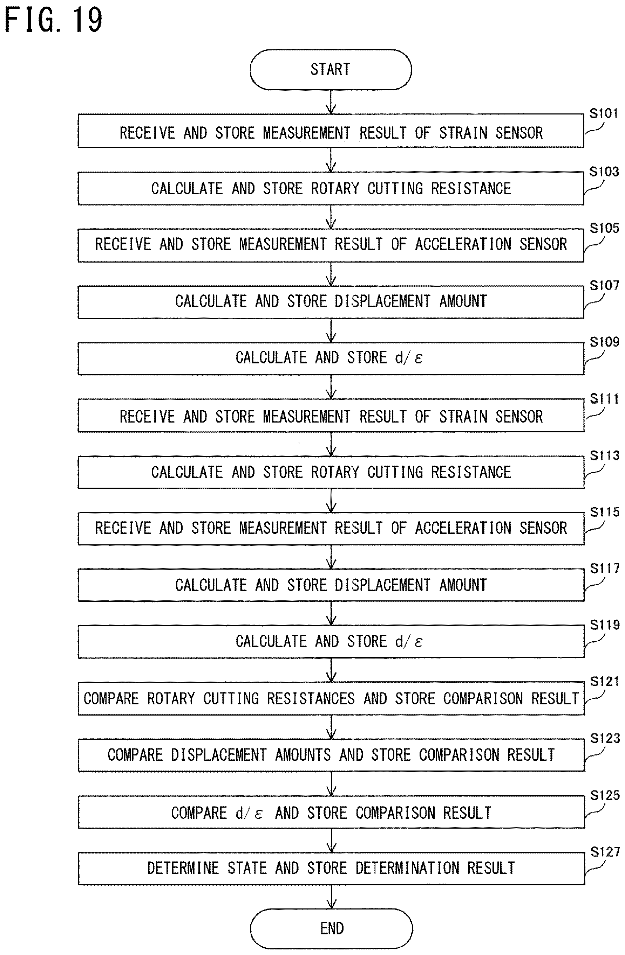

FIG. 19 is a flowchart that defines a processing procedure of the management apparatus in the cutting system according to the third embodiment of the present invention.

Referring to FIG. 19, first, the wireless communication unit 31 receives the wireless signal including the sensor information and the positional information of the corresponding sensor from the wireless communication apparatus 23 of the rotating tool 101 attached to the first machine tool 202A, and stores, in the storage unit 350, the measurement result of the strain sensor 19 indicated by the sensor information and the positional information included in the relevant wireless signal (step S101).

Next, the control unit 320 calculates the rotary cutting resistance F, based on the measurement result and the positional information of the strain sensor 19 accumulated in the storage unit 350, and stores the calculation result in the storage unit 350 (step S103).

Next, the wireless communication unit 31 receives the wireless signal including the sensor information and the positional information from the wireless communication apparatus 23 of the rotating tool 101, and stores, in the storage unit 350, the measurement result of the acceleration sensor 14 indicated by the sensor information and the positional information included in the wireless signal (step S105).

Next, the control unit 320 calculates the displacement amount d of the rotating tool 101, based on the measurement result and the positional information of the acceleration sensor 14 accumulated in the storage unit 350, and stores the calculation result in the storage unit 350 (step S107).

Next, the control unit 320 calculates a ratio $(d/\varepsilon)$ between the displacement amount d and the strain $\varepsilon$, based on the displacement amount d and the strain $\varepsilon$ accumulated in the storage unit 350, and stores the calculation result in the storage unit 350 (step S109).

Next, the wireless communication unit 31 receives the wireless signal including the sensor information from the wireless communication apparatus 23 of the rotating tool 101 attached to the second machine tool 202B, and stores, in the storage unit 350, the measurement result of the strain sensor 19 indicated by the sensor information included in the wireless signal (step S111).

Next, the control unit 320 performs processing similar to steps S103 to S109 in the second machine tool 202B.

Here, processing shown in FIG. 19 is performed under the following conditions as an example. That is, the machining conditions in the first machine tool 202A and the machining conditions in the second machine tool 202B are the same.

In addition, as an example, the rotary cutting object to be rotationally cut by the first machine tool 202A and the object to be rotationally cut by the second machine tool 202B are the same.

Specifically, for example, machining conditions such as the feed amount per blade of the rotating tool 101 and the depth of cut in the axial direction of the rotating tool 101 are the same between the first machine tool 202A and the second machine tool 202B.

The rotating tool 101 attached to the first machine tool 202A is the same as the rotating tool 101 attached to the second machine tool 202B.

Specifically, for example, the rotating tool 101 attached to the tool holder 210 of the second machine tool 202B may be the rotating tool 101 detached from the first machine tool 202A, or may be another rotating tool of the same type as that of the rotating tool 101 attached to the first machine tool 202A (steps S113 to S119).

Next, the control unit 320 compares the rotary cutting resistance F of the rotating tool 101 attached to the first machine tool (hereinafter, also referred to as the rotary cutting resistance F1) and the rotary cutting resistance F of the rotating tool 101 attached to the second machine tool (hereinafter, also referred to as the rotary cutting resistance F2), which are stored in the storage unit 350, and stores a comparison result in the storage unit 350.

Specifically, the control unit 320 determines whether or not the rotary cutting resistance F1 and the rotary cutting resistance F2 have the same value. Note that the control unit 320 may be configured to determine that the values are the same even when there is a difference within a predetermined range between the rotary cutting resistance F1 and the rotary cutting resistance F2 (step S121).

Next, the control unit 320 compares the displacement amount d of the rotating tool 101 attached to the first machine tool 202A (hereinafter, also referred to as a displacement amount d1), and the displacement amount d of the rotating tool 101 attached to the second machine tool 202B (hereinafter, also referred to as a displacement amount d2), which are stored in the storage unit 350, and stores a comparison result in the storage unit 350.

Specifically, the control unit 320 determines whether or not the displacement amount d1 and the displacement amount d2 have the same value. Note that the control unit 320 may be configured to determine the same value even when there is a difference within a predetermined range between the displacement amount d1 and the displacement amount d2 (step S123).

Next, the control unit 320 compares the ratio $d/\varepsilon$ with respect to the rotating tool 101 attached to the first machine tool 202A (hereinafter, also referred to as a ratio k1), and the ratio $d/\varepsilon$ with respect to the rotating tool 101 attached to the second machine tool 202B (hereinafter, also referred to as a ratio k2), which are stored in the storage unit 350, and stores a comparison result in the storage unit 350.

Specifically, the control unit 320 determines whether or not the ratio k1 and the ratio k2 have the same value. Note that the control unit 320 may be configured to determine that the values are the same even when there is a difference within a predetermined range between the ratio k1 and the ratio k2 (step S125).

Next, the control unit 320 determines the state of the system of the first machine tool 202A, based on each of the comparison results accumulated in the storage unit 350. Here, the system of the first machine tool 202A includes the first machine tool 202A, the rotating tool 101, and the rotary cutting object (step S127).

Note that a part of the processing shown in FIG. 19 may be performed in parallel. Specifically, for example, the processing in steps S101 to S109 and the processing in steps S111 to S119 may be performed in parallel. Further, the processing in steps S101 and S103 and the processing in steps S105 and S107 may be performed in parallel. Further, the processing in steps S111 and S113 and the processing in steps S115 and S117 may be performed in parallel.

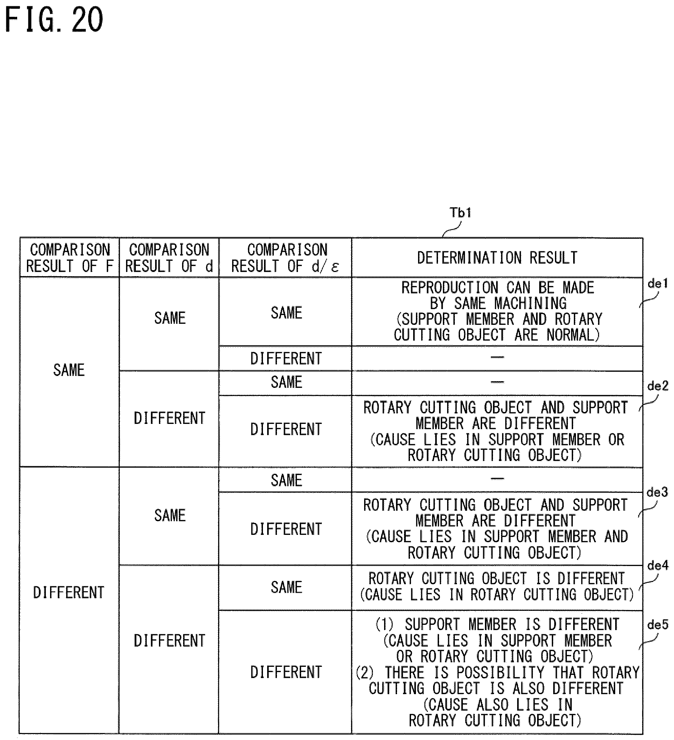

FIG. 20 is a diagram showing one example of a criterion table held by the storage unit of the management apparatus in the cutting system according to the third embodiment of the present invention.

Referring to FIG. 20, a criterion table Tb1 is used for a criterion when the control unit 320 determines the state of the first machine tool 202A. The storage unit 350 in the management apparatus 3010 stores the criterion table Tb1.

In the criterion table Tb1, there are described determination results in accordance with combinations of the comparison result of the rotary cutting resistance F1 and the rotary cutting resistance F2, the comparison result of the displacement amount d1 and the displacement amount d2, and the comparison result of the ratio k1 and the ratio k2.

The criterion table Tb1 serves as a criterion when it is determined in what state the system of the first machine tool 202A is, as compared with the system of the second machine tool 202B. For example, the criterion table Tb1 is based on the premise that the system of the second machine tool 202B is in an appropriate state. By performing the determination, using the criterion table Tb1, it is possible to determine in what state the system of the first machine tool 202A is, as compared with the system of the second machine tool 202B, that is, whether the system is in an appropriate state.

For example, during the rotary cutting by the first machine tool 202A, if at least any one of abnormal vibration, abnormal noise, and a decrease in the accuracy of the rotary cutting is caused, it is possible to determine which of the influence by the rotating tool 101 and the influence by the spindle 220 of the machine tool and the tool holder 210 a cause thereof largely depends on.

In an example shown in FIG. 20, if the rotary cutting resistance F1 and the rotary cutting resistance F2 are the same, the displacement amount d1 and the displacement amount d2 are the same, and the ratio k1 and the ratio k2 are the same, it is determined that the same rotary cutting as that in the rotary cutting in the first machine tool 202A has been able to be reproduced in the second machine tool 202B. Namely, it is determined that the support member 230 and the rotary cutting object of the first machine tool 202A are normal (de1).

Further, if the rotary cutting resistance F1 and the rotary cutting resistance F2 are the same, the displacement amount d1 and the displacement amount d2 are different, and the ratio k1 and the ratio k2 are different, it is determined that the rotary cutting object of the second machine tool 202B and the rotary cutting object of the first machine tool 202A are different, and that the support member 230 in the second machine tool 202B and the support member 230 of the first machine tool 202A are different. Namely, it can be seen that causes of the problem in the rotary cutting lie in the support member 230 of the first machine tool 202A and the rotary cutting object (de2).

As causes of a problem in the support member 230, there can be cited, for example, improper attachment of the tool holder 210 to the spindle 220 of the machine tool due to biting of chips, a difference in rigidity of the spindle 220 between the respective machine tools, and the like. In addition, as causes of a problem in the rotary cutting object, there can be cited, for example, an actual difference in a material of the rotary cutting object between the manufacturing facility and the verification facility, a difference in rigidity of a jig used for fixing of the rotary cutting object between the manufacturing facility and the verification facility, and the like.

Further, if the rotary cutting resistance F1 and the rotary cutting resistance F2 are different, the displacement amount d1 and the displacement amount d2 are the same, and the ratio k1 and the ratio k2 are different, it is determined that the rotary cutting object of the second machine tool 202B and the rotary cutting object in the first machine tool 202A are different, and that the support member 230 in the second machine tool 202B and the support member 230 of the first machine tool 202A are different. Namely, it can be seen that the causes of the problem in the rotary cutting lie in the support member 230 of the first machine tool 202A and the rotary cutting object (de3).

Further, if the rotary cutting resistance F 1 and the rotary cutting resistance F2 are different, the displacement amount d1 and the displacement amount d2 are different, and the ratio k1 and the ratio k2 are the same, it is determined that the rotary cutting object of the second machine tool 202B and the rotary cutting object of the first machine tool 202A are different. Namely, it can be seen that the cause of the problem in the rotary cutting lies in the rotary cutting object (de4).

Further, if the rotary cutting resistance F 1 and the rotary cutting resistance F2 are different, the displacement amount d1 and the displacement amount d2 are different, and the ratio k1 and the ratio k2 are different, it is determined that the support member 230 in the second machine tool 202B and the support member 230 in the first machine tool 202A are different. Namely, it can be seen that the cause of the problem in the rotary cutting lies in the support member 230 of the first machine tool 202A (de5 (1)). In this case, it may be determined that there is a possibility that the rotary cutting object of the second machine tool 202B and the rotary cutting object of the first machine tool 202A are different. That is, the cause of the problem in the rotary cutting also lies in the rotary cutting object (de5 (2)).

The control unit 320 determines the state of the system of the first machine tool 202A, specifically, the state of the support member 230, and the state of the rotary cutting object, based on the comparison result stored in the storage unit 350 and the criterion table Tb1 stored in the storage unit 350.

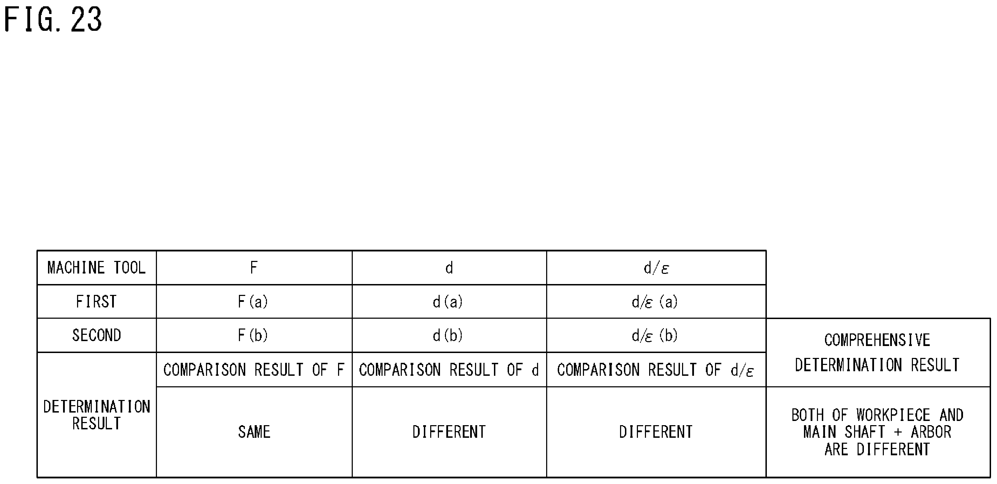

FIG. 23 is an explanatory diagram showing a display example of the determination result by the display unit.

As shown in FIG. 23, the control unit 320 of the management apparatus 3010 can cause the display unit 33 to display the above-described determination result. FIG. 23 is a display example when the determination result of the control unit 320 is a determination result de2 of the criterion table Tb1 (FIG. 20), and in fields of F(a), F(b), d(a), d(b), d/ε(a), and d/ε (b), numerical values are respectively displayed. Contents of the comparison results of F, d, d/ε and a comprehensive determination result in FIG. 23 are one example, and the present embodiment is not limited thereto.

Note that the control unit 32 can also cause the display unit 33 to display the other determination results de1, de3 to de5 in a display format similar to that in FIG. 23.

Further, the determination results de1 to de5 based on the criterion table Tb1 can also be transmitted from the wireless communication unit 310 to an external apparatus (another management apparatus, a portable terminal, or the like). In this case, the determination results de1 to de5 can be displayed in a predetermined display format on a display included in the external apparatus.

Note that one acceleration sensor 14 and one strain sensor 19 may be attached to the shank portion 11. Any one of the acceleration sensor 14 and the strain sensor 19 may be attached to the shank portion 11, and the number of the relevant sensors may be one or more.

In the cutting system 205 and the processing method M, as described above, instead of the rotating tool 101, a turning tool such as a cutter not shown may be used as another example. In this case, a first machine tool and a second machine tool for turning not shown are used instead of the first machine tool 202A and the second machine tool 202B.

Specifically, for example, the first machine tool and the second machine tool for turning are CNC (Computer Numerical Control) lathes or combined machining machines.

In the CNC lathe, the turning tool is attached, for example, to a turret having a high rigidity. Further, in the combined machining machine, the turning tool is attached to, for example, the spindle having a lower rigidity than the turret.

The turning tool includes, for example, the shank portion 11, the blade attaching portion 12 or the blade portion, the acceleration sensor 14, and the strain sensor 19, similarly to the rotating tool 101 shown in FIGS. 1 and 2. Alternatively, the turning tool includes, for example, the shank portion 11, the blade attaching portion 12 or the blade portion, the acceleration sensor 14, the strain sensor 19, the temperature sensor 26, and the sound sensor 27, similarly to the rotating tool 104 shown in FIG. 10.

In the processing method M using the turning tool, for example, processing similar to steps S101 to S127 shown in FIG. 19 is performed.

That is, in the processing method M using the turning tool, for example, the control unit 320 of the management apparatus 301 shown in FIG. 14 can determine the state of the system of the first machine tool, based on each of the comparison results accumulated in the storage unit 350 of the management apparatus 3010. Here, the system of the first machine tool includes the first machine tool, the turning tool, and a turning object. Further, the control unit 320 performs determination, using a criterion table for turning stored in the storage unit 350, by which it can be determined in what state the system of the first machine tool is, as compared with the system of the second machine tool, that is, whether it is in an appropriate state.

As described above, the cutting system according to the third embodiment of the present invention includes the cutting tool such as the rotating tool 101 and the management apparatus 3010. The rotating tool 101 has the shank portion 11 having the end attached to a machine tool, the blade attaching portion 12 or the blade portion provided at the end of the shank portion 11 opposite to the above-mentioned end, and the sensors attached to the shank portion 11. The management apparatus 3010 includes the wireless communication unit 310 and the control unit 320. The wireless communication unit 310 accumulates, in the storage unit 350, the measurement results of the sensors when the rotary cutting of the rotary cutting object is performed by the rotating tool 101 attached to the first machine tool 202A, and accumulates, in the storage unit 350, the measurement results of the sensors when the rotary cutting of the rotary cutting object is performed by reattaching, to the second machine tool 202B, the rotating tool 101 attached to the first machine tool 202A. The control unit 320 processes each of the measurement results accumulated by the wireless communication unit 310.

With the above-described configuration, for example, the physical quantity based on the measurement result of each of the sensors in the rotating tool 101 attached to the first machine tool 202A and the physical quantity based on the measurement result of each of the sensors in the rotating tool 101 attached to the second machine tool 202B are compared, so that it is possible to easily determine whether the cause of the problem in the cutting using the first machine tool 202A largely depends on the rotating tool 101, or largely depends on the first machine tool 202A, or the like.

Accordingly, in the cutting system according to the third embodiment of the present invention, it is possible to accurately measure the state of machining by the cutting tool.

Further, in a processing method performed by the third embodiment of the present invention, a cutting tool such as the rotating tool 101 is used. The rotating tool 101 includes the shank portion 11 having the end attached to the machine tool, the blade attaching portion 12 or the blade portion provided at the end of the shank portion 11 opposite to the above-described end, and the sensors attached to the shank portion 11. In the above processing method, the user attaches the rotating tool 101 to the first machine tool 202A. Next, the rotating tool 101 attached to the first machine tool 202A performs the rotary cutting of the rotary cutting object. Next, the management apparatus 301 accumulates the measurement results of the sensors. Next, the user reattaches the rotating tool 101 attached to the first machine tool 202A to the second machine tool 202B. Next, the rotating tool 101 reattached to the second machine tool 202B performs the rotary cutting of the rotary cutting object. Next, the management apparatus 3010 accumulates the measurement results of the sensors. Next, the management apparatus 3010 processes each of the accumulated measurement results.

By the above-described method, for example, the physical quantity based on the measurement result of each of the sensors in the rotating tool 101 attached to the first machine tool 202A and the physical quantity based on the measurement result of each of the sensors in the rotating tool 101 attached to the second machine tool 202B are compared, so that it is possible to easily determine whether the cause of the problem in the cutting using the first machine tool 202A largely depends on the rotating tool 101, or largely depends on the first machine tool 202A, or the like.

Accordingly, in the processing method performed by the third embodiment of the present invention, the state of machining by the cutting tool can be accurately measured.

Further, in the cutting system and the processing method according to the third embodiment of the present disclosure, the acceleration sensor 14 and the strain sensor 19 are used.

With the above-described configuration and method, for example, the displacement amount d, which is the physical quantity based on the measurement result of the acceleration sensor 14, the rotary cutting resistance F, which is the physical quantity based on the measurement result of the strain sensor 19, and the ratio $d/\varepsilon$, which is the physical quantity based on the measurement result of the acceleration sensor 14 and the measurement result of the strain sensor 19, are acquired, and various verifications can be performed, using the respective physical quantities.

<Other modifications>

The above-described embodiments should be considered to be illustrative in all respects, and not to be restrictive. The scope of the present invention is defined by the terms of the claims, rather than the description above, and is intended to include any modifications within the scope of the claims.

For example, in the above-described embodiment, the shank portion 11 of the rotating tool 101 may be provided with an analysis function of the measurement results of the strain, the acceleration and the like, and the analysis result performed on the tool side may be wirelessly transmitted to the management apparatus 301.

The above-described embodiments can be realized, for example, by containing, in the housing 24, a storage unit that accumulates the measurement results for a predetermined time, and a processing unit that performs predetermined analysis on the accumulated measurement results, together with the sensors 14, 19, the battery 22, the wireless communication apparatus 23, and the like.

In this case, the processing unit on the tool side calculates the moving maximum value, the moving minimum value, the moving average value, and the like from the measurement result of the strain, the acceleration or the like, and causes the wireless communication apparatus 23 to transmit the calculated analysis data.

The processing performed by the processing unit on the tool side may include processing in which a value and a time when the measurement result of the strain, the acceleration or the like exceeds a predetermined threshold are recorded on the storage unit, and the recorded data is transmitted to the wireless communication apparatus 23.

**REFERENCE SIGNS LIST**

11, 113: SHANK PORTION
12: BLADE ATTACHING PORTION
14: ACCELERATION SENSOR
17: ROTATION AXIS
18: PLANE
19: STRAIN SENSOR
22: BATTERY
23: WIRELESS COMMUNICATION APPARATUS
24: HOUSING
26: TEMPERATURE SENSOR
27: SOUND SENSOR
31, 310: WIRELESS COMMUNICATION UNIT
32, 320: CONTROL UNIT

33: DISPLAY UNIT
35, 350: STORAGE UNIT
36: OPERATION INPUT UNIT
101, 104, 105, 107: ROTATING TOOL
102: DRILL
103: MILLING CUTTER
106: ROTATING TOOL UNIT
111: BODY PORTION
112: BOSS PORTION
114: ATTACHING MODULE
114A: BODY
114B: SCREW PORTION
114C: DETENT PORTION
118: BOSS PORTION
141: MEASUREMENT DIRECTION
143: STRAIGHT LINE
201, 203, 205: CUTTING SYSTEM
202: MACHINE TOOL
202A: FIRST MACHINE TOOL
202B: SECOND MACHINE TOOL
210: TOOL HOLDER
220: SPINDLE OF MACHINE TOOL
230, 230a, 230b: SUPPORT MEMBER
301, 3010: MANAGEMENT APPARATUS
A1: AXIAL DIRECTION
H1: HEIGHT DIRECTION

**Claims**

1. A rotating tool (101) adapted to be used in a state held by a tool holder (210), comprising:

   a shaft portion (11) having an end attachable to the tool holder;
   a blade attaching portion (12) or a blade portion provided at an end of the shaft portion opposite to the end; and
   a plurality of sensors attached to the shaft portion, wherein
   the plurality of sensors include an acceleration sensor (14) and a strain sensor (19),
   a measurement direction of the acceleration sensor includes a tangential direction of an outer circumferential surface of the shaft portion, and
   a measurement direction of the strain sensor is an axial direction (A1) of the shaft portion.

2. The rotating tool according to claim 1, wherein the plurality of sensors include at least two acceleration sensors (14).

3. The rotating tool according to claim 1, wherein the plurality of sensors include at least two strain sensors (19).

4. The rotating tool according to any one of claims 1 to 3, wherein
   the plurality of sensors further include at least any one of a temperature sensor (26) and a sound sensor (27).

5. The rotating tool according to any one of claims 1 to 4, further comprising a housing (24) attached to the shaft portion (11), wherein the housing stores the sensors.

6. The rotating tool according to any one of claims 1 to 5, further comprising a wireless communication apparatus (23) attached to the shaft portion (11), wherein
   the wireless communication apparatus transmits sensor information indicating a measurement result of each of the sensors.

7. The rotating tool according to claim 6, wherein
   the wireless communication (23) apparatus further transmits identification information that enables each of the plurality of sensors to be identified.

8. The rotating tool according to claim 6 or claim 7, wherein
the wireless communication apparatus (23) further transmits positional information indicating a positional relationship between each of the sensors and the blade attaching portion or a positional relationship between each of the sensors and the blade portion.

9. A cutting system (201) comprising:

the rotating tool (101) according to any one of claims 1 to 8; and
a management apparatus (301), wherein
the management apparatus receives sensor information indicating a measurement result of each of the sensors from the rotating tool.

10. An attaching module (114) attachable to a shaft portion of a rotating tool (107), the rotating tool including the shaft portion and a blade attaching portion (12) or a blade portion provided at an end of the shaft portion, the attaching module comprising:

a body (114A) that is columnar and attachable to the shaft portion along an axial direction of the shaft portion; and
a plurality of sensors attached to the body, wherein
the plurality of sensors include an acceleration sensor (14) and a strain sensor (19),
a measurement direction of the acceleration sensor includes a tangential direction of an outer circumferential surface of the body, and
a measurement direction of the strain sensor is an axial direction (A1) of the body.

11. The attaching module according to claim 10, wherein the plurality of sensors include at least two acceleration sensors (14).

12. The attaching module according to claim 10, wherein the plurality of sensors include at least two strain sensors (19).

13. The attaching module according to any one of claims 10 to 12, wherein

the rotating tool (107) includes:

the blade attaching portion (12) or the blade portion at a first end of the shaft portion; and
a boss portion (112) at a second end of the shaft portion, and

the columnar body is attachable to the boss portion.

**Patentansprüche**

1. Drehwerkzeug (101), das zur Verwendung in einem Zustand ausgelegt ist, in welchem es von einem Werkzeughalter (210) gehalten wird, mit:

einem Schaftabschnitt (11) mit einem Ende, das an dem Werkzeughalter befestigbar ist;
einem Klingenbefestigungsabschnitt (12) oder einem Klingenabschnitt, der an einem Ende des Schaftabschnitts gegenüber dem Ende vorgesehen ist; und
mehreren Sensoren, die an dem Schaftabschnitt befestigt sind, wobei
die mehreren Sensoren einen Beschleunigungssensor (14) und einen Dehnungssensor (19) enthalten,
eine Messrichtung des Beschleunigungssensors eine Tangentialrichtung einer Außenumfangsfläche des Schaftabschnitts beinhaltet, und
eine Messrichtung des Dehnungssensors eine Axialrichtung (A1) des Schaftabschnitts ist.

2. Drehwerkzeug nach Anspruch 1, wobei die mehreren Sensoren mindestens zwei Beschleunigungssensoren (14) enthalten.

3. Drehwerkzeug nach Anspruch 1, wobei die mehreren Sensoren mindestens zwei Dehnungssensoren (19) enthalten.

4. Drehwerkzeug nach einem der Ansprüche 1 bis 3, wobei

die mehreren Sensoren ferner mindestens einen Temperatursensor (26) und/oder einen Schallsensor (27) enthalten.

5. Drehwerkzeug nach einem der Ansprüche 1 bis 4, ferner mit einem Gehäuse (24), das an dem Schaftabschnitt (11) angebracht ist, wobei das Gehäuse die Sensoren aufnimmt.

6. Drehwerkzeug nach einem der Ansprüche 1 bis 5, das ferner eine Drahtlos-Kommunikationsvorrichtung (23) aufweist, die an dem Schaftabschnitt (11) angebracht ist, wobei die Drahtlos-Kommunikationsvorrichtung Sensorinformationen überträgt, die ein Messergebnis jedes der Sensoren anzeigen.

7. Drehwerkzeug nach Anspruch 6, wobei
die drahtlose Kommunikationsvorrichtung (23) ferner Identifizierungsinformationen überträgt, die es ermöglichen, jeden der mehreren Sensoren zu identifizieren.

8. Drehwerkzeug nach Anspruch 6 oder Anspruch 7, wobei
die Drahtlos-Kommunikationsvorrichtung (23) ferner Positionsinformationen überträgt, die eine Positionsbeziehung zwischen jedem der Sensoren und dem Klingenbefestigungsabschnitt oder eine Positionsbeziehung zwischen jedem der Sensoren und dem Klingenabschnitt anzeigen.

9. Schneidsystem (201), mit:

dem Drehwerkzeug (101) nach einem der Ansprüche 1 bis 8; und
einer Verwaltungsvorrichtung (301), wobei die Verwaltungsvorrichtung Sensorinformationen empfängt, die ein Messergebnis jedes der Sensoren von dem Drehwerkzeug anzeigen.

10. Befestigungsmodul (114), das an einem Schaftabschnitt eines Drehwerkzeugs (107) befestigbar ist, wobei das Drehwerkzeug den Schaftabschnitt und einen Klingenbefestigungsabschnitt (12) oder einen Klingenabschnitt aufweist, der an einem Ende des Schaftabschnitts vorgesehen ist, wobei das Befestigungsmodul aufweist:

einen Körper (114A), der säulenförmig ist und entlang einer axialen Richtung des Schaftabschnitts an diesem befestigbar ist; und
mehrere Sensoren, die an dem Körper befestigt sind, wobei
die mehreren Sensoren einen Beschleunigungssensor (14) und einen Dehnungssensor (19) enthalten,
eine Messrichtung des Beschleunigungssensors eine Tangentialrichtung einer Außenumfangsfläche des Körpers beinhaltet, und
eine Messrichtung des Dehnungssensors eine Axialrichtung (A1) des Körpers ist.

11. Befestigungsmodul nach Anspruch 10, wobei die mehreren Sensoren mindestens zwei Beschleunigungssensoren (14) enthalten.

12. Befestigungsmodul nach Anspruch 10, wobei die mehreren Sensoren mindestens zwei Dehnungssensoren (19) enthalten.

13. Befestigungsmodul nach einem der Ansprüche 10 bis 12, wobei

das Drehwerkzeug (107) aufweist:

den Klingenbefestigungsabschnitt (12) oder den Klingenabschnitt an einem ersten Ende des Schaftabschnitts; und
einen Nabenabschnitt (112) an einem zweiten Ende des Schaftabschnitts, und

der säulenförmige Körper an dem Nabenabschnitt befestigbar ist.


**Revendications**

1. Outil rotatif (101) adapté pour être utilisé dans un état maintenu par un porte-outil (210), comprenant :

une partie d'arbre (11) ayant une extrémité pouvant être fixée au porte-outil ;

une partie de fixation de lame (12) ou une partie de lame prévue à une extrémité de la partie d'arbre opposée à l'extrémité ; et
une pluralité de capteurs fixés sur la partie d'arbre, dans lequel :

la pluralité de capteurs comprend un capteur d'accélération (14) et un capteur de contrainte (19),
une direction de mesure du capteur d'accélération comprend une direction tangentielle d'une surface circonférentielle externe de la partie d'arbre, et
une direction de mesure du capteur de contrainte est une direction axiale (A1) de la partie d'arbre.

2. Outil rotatif selon la revendication 1, dans lequel la pluralité de capteurs comprend au moins deux capteurs d'accélération (14).

3. Outil rotatif selon la revendication 1, dans lequel la pluralité de capteurs comprend au moins deux capteurs de contrainte (19).

4. Outil rotatif selon l'une quelconque des revendications 1 à 3, dans lequel :
la pluralité de capteurs comprend en outre au moins l'un quelconque parmi un capteur de température (26) et un capteur de son (27).

5. Outil rotatif selon l'une quelconque des revendications 1 à 4, comprenant en outre un boîtier (24) fixé à la partie d'arbre (11), dans lequel le boîtier stocke les capteurs.

6. Outil rotatif selon l'une quelconque des revendications 1 à 5, comprenant en outre un appareil de communication sans fil (23) fixé à la partie d'arbre (11), dans lequel :
l'appareil de communication sans fil transmet une information de capteur indiquant un résultat de mesure de chacun des capteurs.

7. Outil rotatif selon la revendication 6, dans lequel :
l'appareil de communication sans fil (23) transmet en outre une information d'identification qui permet à chacun de la pluralité de capteurs d'être identifié.

8. Outil rotatif selon la revendication 6 ou la revendication 7, dans lequel :
l'appareil de communication sans fil (23) transmet en outre une information de position indiquant une relation positionnelle entre chacun des capteurs et la partie de fixation de lame ou une relation positionnelle entre chacun des capteurs et la partie de lame.

9. Système de coupe (201) comprenant :

l'outil rotatif (101) selon l'une quelconque des revendications 1 à 8 ; et
un appareil de gestion (301), dans lequel :
l'appareil de gestion reçoit une information de capteur indiquant un résultat de mesure de chacun des capteurs de l'outil rotatif.

10. Module de fixation (114) pouvant être fixé à une partie d'arbre d'un outil rotatif (107), l'outil rotatif comprenant la partie d'arbre et une partie de fixation de lame (12) ou une partie de lame prévue au niveau d'une extrémité de la partie d'arbre, le module de fixation comprenant :

un corps (114A) qui est colonnaire et peut être fixé à la partie d'arbre le long d'une direction axiale de la partie d'arbre ; et
une pluralité de capteurs fixés au corps, dans lequel :

la pluralité de capteurs comprend un capteur d'accélération (14) et un capteur de contrainte (19),
une direction de mesure du capteur d'accélération comprend une direction tangentielle d'une surface circonférentielle externe du corps, et
une direction de mesure du capteur de contrainte est une direction axiale (A1) du corps.

11. Module de fixation selon la revendication 10, dans lequel la pluralité de capteurs comprend au moins deux capteurs d'accélération (14).

**12.** Module de fixation selon la revendication 10, dans lequel la pluralité de capteurs comprend au moins deux capteurs de contrainte (19).

**13.** Module de fixation selon l'une quelconque des revendications 10 à 12, dans lequel :
l'outil rotatif (107) comprend :

une partie de fixation de lame (12) ou la partie de lame au niveau d'une première extrémité de la partie d'arbre ; et
une partie de bossage (112) au niveau d'une deuxième extrémité de la partie d'arbre, et
le corps colonnaire peut être fixé à la partie de bossage.

# FIG. 1

FIG. 2

# FIG. 3

230(210,220)

L

Lb

101

x

F

FIG. 4

230 (210,220)

A1

L

Lb

101

x

d

F

# FIG. 5

EP 4 552 774 B1

FIG. 6

220
202
201
210
A
17
101
11
24
14
24
14
14
22
23
19
19

301
MANAGEMENT
APPARATUS

12

33

## FIG. 7

MANAGEMENT APPARATUS — 301

WIRELESS COMMUNICATION UNIT — 31

OPERATION INPUT UNIT — 36

STORAGE UNIT — 35

CONTROL UNIT — 32

DISPLAY UNIT — 33

# FIG. 8

FIG. 9

# FIG. 10

MANAGEMENT APPARATUS

| WIRELESS COMMUNICATION UNIT | 31 |
| OPERATION INPUT UNIT | 36 |
| STORAGE UNIT | 35 |
| CONTROL UNIT | 32 |
| DISPLAY UNIT | 33 |

FIG. 11

# FIG. 12

# FIG. 13

FIRST MACHINE TOOL

202A

205

3010

MANAGEMENT
APPARATUS

SECOND MACHINE TOOL

202B

# FIG. 14

MANAGEMENT APPARATUS 3010

WIRELESS COMMUNICATION UNIT 310

OPERATION INPUT UNIT 36

STORAGE UNIT 350

CONTROL UNIT 320

DISPLAY UNIT 33

# FIG. 15

MANUFACTURING FACILITY

3010

MANAGEMENT APPARATUS

202A

FIRST MACHINE TOOL

VERIFICATION FACILITY

3010

MANAGEMENT APPARATUS

202B

SECOND MACHINE TOOL

VERIFICATION FACILITY

PROCESSING OF ANALYSIS AND THE LIKE

3010

MANAGEMENT APPARATUS

FIG. 16

FIG. 17

FIG. 18

# FIG. 19

START

RECEIVE AND STORE MEASUREMENT RESULT OF STRAIN SENSOR — S101

CALCULATE AND STORE ROTARY CUTTING RESISTANCE — S103

RECEIVE AND STORE MEASUREMENT RESULT OF ACCELERATION SENSOR — S105

CALCULATE AND STORE DISPLACEMENT AMOUNT — S107

CALCULATE AND STORE $d/\varepsilon$ — S109

RECEIVE AND STORE MEASUREMENT RESULT OF STRAIN SENSOR — S111

CALCULATE AND STORE ROTARY CUTTING RESISTANCE — S113

RECEIVE AND STORE MEASUREMENT RESULT OF ACCELERATION SENSOR — S115

CALCULATE AND STORE DISPLACEMENT AMOUNT — S117

CALCULATE AND STORE $d/\varepsilon$ — S119

COMPARE ROTARY CUTTING RESISTANCES AND STORE COMPARISON RESULT — S121

COMPARE DISPLACEMENT AMOUNTS AND STORE COMPARISON RESULT — S123

COMPARE $d/\varepsilon$ AND STORE COMPARISON RESULT — S125

DETERMINE STATE AND STORE DETERMINATION RESULT — S127

END

# FIG. 20

Tb1

| COMPARISON RESULT OF F | COMPARISON RESULT OF d | COMPARISON RESULT OF d/ε | DETERMINATION RESULT | |
|---|---|---|---|---|
| SAME | SAME | SAME | REPRODUCTION CAN BE MADE BY SAME MACHINING (SUPPORT MEMBER AND ROTARY CUTTING OBJECT ARE NORMAL) | de1 |
| | | DIFFERENT | — | |
| | DIFFERENT | SAME | — | de2 |
| | | DIFFERENT | ROTARY CUTTING OBJECT AND SUPPORT MEMBER ARE DIFFERENT (CAUSE LIES IN SUPPORT MEMBER OR ROTARY CUTTING OBJECT) | |
| DIFFERENT | SAME | SAME | — | de3 |
| | | DIFFERENT | ROTARY CUTTING OBJECT AND SUPPORT MEMBER ARE DIFFERENT (CAUSE LIES IN SUPPORT MEMBER AND ROTARY CUTTING OBJECT) | |
| | DIFFERENT | SAME | ROTARY CUTTING OBJECT IS DIFFERENT (CAUSE LIES IN ROTARY CUTTING OBJECT) | de4 |
| | | DIFFERENT | (1) SUPPORT MEMBER IS DIFFERENT (CAUSE LIES IN SUPPORT MEMBER OR ROTARY CUTTING OBJECT) (2) THERE IS POSSIBILITY THAT ROTARY CUTTING OBJECT IS ALSO DIFFERENT (CAUSE ALSO LIES IN ROTARY CUTTING OBJECT) | de5 |

# FIG. 21

# FIG. 22

# FIG. 23

| MACHINE TOOL | F | d | $d/\varepsilon$ | |
|---|---|---|---|---|
| FIRST | F (a) | d (a) | $d/\varepsilon$ (a) | |
| SECOND | F (b) | d (b) | $d/\varepsilon$ (b) | COMPREHENSIVE DETERMINATION RESULT |
| DETERMINATION RESULT | COMPARISON RESULT OF F | COMPARISON RESULT OF d | COMPARISON RESULT OF $d/\varepsilon$ | |
| | SAME | DIFFERENT | DIFFERENT | BOTH OF WORKPIECE AND MAIN SHAFT + ARBOR ARE DIFFERENT |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019147274 A
- JP 2009542446 A
- EP 3511096 A1
- US 2006085092 A1
- JP 2018054611 A
- US 9864362 B
- JP 2009285804 A
- JP 2017002762 A
- JP 2016221665 A
- JP 3170029 U
- JP 2015077658 A
- JP 2015056495 A
- EP 3292930 A
- JP 2018047834 A
- JP 2016202569 A
- JP 2006159299 A